# EUROPEAN PATENT APPLICATION

(11) **EP 4 598 199 A1**
(43) Date of publication of application: **06.08.2025**
(21) Application number: 23870392.0
(22) Date of filing: 15.09.2023
(51) Int. Cl.: H04W 72/12

(54) **INFORMATION DETERMINATION METHOD, APPARATUS, TERMINAL AND NETWORK DEVICE**

(30) Priority: 30.09.2022 CN 202211218222
(71) Applicant: Datang Mobile Communications Equipment Co., Ltd., Beijing 100085 (CN)
(72) Inventor: HUANG, Qiuping, Beijing 100085 (CN); GAO, Qiubin, Beijing 100085 (CN)
(74) Representative: Studio Torta S.p.A.
(86) International application number: PCT/CN2023/119027
(87) International publication number: WO 2024/067158

(57) **Abstract**

The present disclosure provides an information determination method, an apparatus, a terminal and a network device, and relates to the technical field of communications. The method comprises: a terminal receiving parameter information and indication information corresponding to first transmission sent by a network device, the parameter information being used for determining the number of codewords, the indication information being used for indicating target information, and the target information comprising at least one of a precoding matrix, the number of layers, or a channel sounding reference signal resource; and, on the basis of the parameter information and the indication information, determining target information corresponding to the first transmission.

## Description

### CROSS-REFERENCES TO RELATED APPLICATIONS

The present application claims priority to Chinese patent application No. 202211218222.1 filed on September 30, 2022, entitled "Information Determination Method, Apparatus, Terminal and Network Device", which is hereby incorporated by reference in its entirety.

### FIELD

The present application relates to the field of communications, and in particular to methods and apparatuses for determining information, a user equipment (UE), and a network device.

### BACKGROUND

In traditional new radio (NR) system, the pre-coding of codebook-based physical uplink share channel (PUSCH) transmission is generally determined based on the pre-coding matrix indicated by the base station, and the pre-coding of non-codebook-based PUSCH transmission is determined based on the sounding reference signaling (SRS) resources indicated by the base station, and the number of transmission layers is equal to the number of SRS resources indicated by the base station.

As the number of antenna ports supported by PUSCH transmission increases, the number of pre-coding matrices, the number of layers, and the number of SRS resources corresponding to PUSCH transmission increase. As a result, in case that the pre-coding matrix, the number of layers, or the channel SRS resources are indicated through uplink scheduling information, the overhead of the indication information for indicating the pre-coding matrix, the number of layers, or the channel SRS resources in the uplink scheduling information is large.

### BRIEF SUMMARY

Embodiments of the present application provide methods and apparatuses for determining information, a user equipment (UE) and a network device, to solve a problem in the related art that as the number of antenna ports increases, an overhead of indication information for indicating a pre-coding matrix, number of layers or channel sounding reference signaling (SRS) resources is large, to reduce the overhead of the indication information.

An embodiment of the present application provides a method for determining information, performed by a user equipment (UE), including:
receiving indication information and parameter information corresponding to a first transmission transmitted from a network device, where the parameter information is used to determine a number of codewords, the indication information is used to indicate target information, and the target information includes one or more of a pre-coding matrix, a number of layers, or a channel sounding reference signaling (SRS) resource; and
determining the target information corresponding to the first transmission based on the parameter information and the indication information.

In an embodiment, the parameter information includes one or more of the following:
information of the number of codewords;
modulation and coding scheme (MCS) indication information of the first transmission; or
redundancy version (RV) indication information of the first transmission.

In an embodiment, determining the target information corresponding to the first transmission based on the parameter information and the indication information includes:
determining the number of codewords based on the parameter information; and
determining the target information corresponding to the first transmission based on the number of codewords and the indication information.

In an embodiment, determining the target information corresponding to the first transmission based on the number of codewords and the indication information includes:
determining the target information corresponding to the first transmission based on the number of codewords, the indication information, and a given mapping relationship;
where the given mapping relationship is used to represent a mapping relationship between the indication information and the target information.

In an embodiment, the given mapping relationship is expressed in one or more of the following forms:
codebook;
table;
bitmap; or
function.

In an embodiment, in case that the target information includes the pre-coding matrix,
if the number of codewords is a first number, the pre-coding matrix indicated by the indication information is a pre-coding matrix corresponding to a number of layers within a first range of number of layers; and
if the number of codewords is a second number, the pre-coding matrix indicated by the indication information is a pre-coding matrix corresponding to a number of layers within a second range of number of layers, where the first range of number of layers and the second range of number of layers are different.

In an embodiment, a maximum number of layers in the first range of number of layers and the second range of number of layers is determined based on one or more of the following:
a maximum number of layers determined based on restriction information for number of layers;
a number of layers configured by the network device; or
a maximum number of layers supported by the UE.

In an embodiment, a bit width of the indication information is determined based on the first range of number of layers and/or the second range of number of layers.

In an embodiment, in case that the target information includes the number of layers,
if the number of codewords is a first number, the number of layers indicated by the indication information is a number of layers within a first range of number of layers; and
if the number of codewords is a second number, the number of layers indicated by the indication information is a number of layers within a second range of number of layers.

In an embodiment, a bit width of the indication information is determined based on the first range of number of layers and/or the second range of number of layers.

In an embodiment, the bit width of the indication information is determined based on a third number of layers within the first range of number of layers, and/or a fourth number of layers within the second range of number of layers;
where in case that the bit width of the indication information is determined based on the third number and the fourth number, the bit width of the indication information is a maximum number of the third number and the fourth number.

In an embodiment, in case that the target information includes the channel SRS resource,
if the number of codewords is a first number, a number of channel SRS resources indicated by the indication information is a value within a first range; and
if the number of codewords is a second number, a number of channel SRS resources indicated by the indication information is a value within a second range, where the first range and the second range are different.

In an embodiment, a bit width of the indication information is determined based on the first range and/or the second range.

In an embodiment, the bit width of the indication information is determined based on a fifth number of values included in the first range and/or a sixth number of values included in the second range;
where in case that the bit width of the indication information is determined based on the fifth number and the sixth number, the bit width of the indication information is a maximum number of the fifth number and the sixth number.

In an embodiment, determining the target information corresponding to the first transmission based on the parameter information and the indication information includes:
determining a number of antenna ports corresponding to the first transmission; and
determining the target information corresponding to the first transmission based on the parameter information and the indication information in case that the number of antenna ports is a given number.

An embodiment of the present application provides a method for determining information, performed by a network device, including:
determining parameter information corresponding to a first transmission and indication information corresponding to target information corresponding to the first transmission, where the parameter information is used to determine a number of codewords, the target information includes one or more of a pre-coding matrix, a number of layers, or a channel sounding reference signaling (SRS) resource, and the indication information is used to indicate the target information; and
transmitting the parameter information and the indication information to a user equipment (UE).

In an embodiment, the parameter information includes one or more of the following:
information of the number of codewords;
modulation and coding scheme (MCS) indication information of the first transmission; or
redundancy version (RV) indication information of the first transmission.

In an embodiment, determining the indication information includes:
determining the indication information based on the target information.

In an embodiment, determining the indication information based on the target information includes:
determining the indication information based on the target information and a given mapping relationship;
where the given mapping relationship is used to represent a mapping relationship between the indication information and the target information.

In an embodiment, the given mapping relationship is expressed in one or more of the following forms:
codebook;
table;
bitmap; or
function.

In an embodiment, in case that the target information includes the pre-coding matrix,
if the number of codewords is a first number, the pre-coding matrix indicated by the indication information is a pre-coding matrix corresponding to a number of layers within a first range of number of layers; and
if the number of codewords is a second number, the pre-coding matrix indicated by the indication information is a pre-coding matrix corresponding to a number of layers within a second range of number of layers, where the first range of number of layers and the second range of number of layers are different.

In an embodiment, a maximum number of layers in the first range of number of layers and the second range of number of layers is determined based on one or more of the following:
a maximum number of layers determined based on restriction information for number of layers;
a number of layers configured by the network device; or
a maximum number of layers supported by the UE.

In an embodiment, a bit width of the indication information is determined based on the first range of number of layers and/or the second range of number of layers.

In an embodiment, in case that the target information includes the number of layers,
if the number of codewords is a first number, the number of layers indicated by the indication information is a number of layers within a first range of number of layers; and
if the number of codewords is a second number, the number of layers indicated by the indication information is a number of layers within a second range of number of layers.

In an embodiment, a bit width of the indication information is determined based on the first range of number of layers and/or the second range of number of layers.

In an embodiment, the bit width of the indication information is determined based on a third number of layers within the first range of number of layers, and/or a fourth number of layers within the second range of number of layers;
where in case that the bit width of the indication information is determined based on the third number and the fourth number, the bit width of the indication information is a maximum number of the third number and the fourth number.

In an embodiment, in case that the target information includes the channel SRS resource,
if the number of codewords is a first number, a number of channel SRS resources indicated by the indication information is a value within a first range; and
if the number of codewords is a second number, a number of channel SRS resources indicated by the indication information is a value within a second range, where the first range and the second range are different.

In an embodiment, a bit width of the indication information is determined based on the first range and/or the second range.

In an embodiment, the bit width of the indication information is determined based on a fifth number of values included in the first range and/or a sixth number of values included in the second range;
where in case that the bit width of the indication information is determined based on the fifth number and the sixth number, the bit width of the indication information is a maximum number of the fifth number and the sixth number.

An embodiment of the present application provides a user equipment (UE), including a memory, a transceiver, and a processor;
where the memory is used for storing a computer program, the transceiver is used for receiving and transmitting data under control of the processor, and the processor is used for reading the computer program in the memory and performing following operations:
receiving indication information and parameter information corresponding to a first transmission transmitted from a network device, where the parameter information is used to determine a number of codewords, the indication information is used to indicate target information, and the target information includes one or more of a pre-coding matrix, a number of layers, or a channel sounding reference signaling (SRS) resource; and
determining the target information corresponding to the first transmission based on the parameter information and the indication information.

In an embodiment, the parameter information includes one or more of the following:
information of the number of codewords;
modulation and coding scheme (MCS) indication information of the first transmission; or
redundancy version (RV) indication information of the first transmission.

In an embodiment, determining the target information corresponding to the first transmission based on the parameter information and the indication information includes:
determining the number of codewords based on the parameter information; and
determining the target information corresponding to the first transmission based on the number of codewords and the indication information.

In an embodiment, determining the target information corresponding to the first transmission based on the number of codewords and the indication information includes:
determining the target information corresponding to the first transmission based on the number of codewords, the indication information, and a given mapping relationship;
where the given mapping relationship is used to represent a mapping relationship between the indication information and the target information.

In an embodiment, the given mapping relationship is expressed in one or more of the following forms:
codebook;
table;
bitmap; or
function.

In an embodiment, in case that the target information includes the pre-coding matrix,
if the number of codewords is a first number, the pre-coding matrix indicated by the indication information is a pre-coding matrix corresponding to a number of layers within a first range of number of layers; and
if the number of codewords is a second number, the pre-coding matrix indicated by the indication information is a pre-coding matrix corresponding to a number of layers within a second range of number of layers, where the first range of number of layers and the second range of number of layers are different.

In an embodiment, a maximum number of layers in the first range of number of layers and the second range of number of layers is determined based on one or more of the following:
a maximum number of layers determined based on restriction information for number of layers;
a number of layers configured by the network device; or
a maximum number of layers supported by the UE.

In an embodiment, a bit width of the indication information is determined based on the first range of number of layers and/or the second range of number of layers.

In an embodiment, in case that the target information includes the number of layers,
if the number of codewords is a first number, the number of layers indicated by the indication information is a number of layers within a first range of number of layers; and
if the number of codewords is a second number, the number of layers indicated by the indication information is a number of layers within a second range of number of layers.

In an embodiment, a bit width of the indication information is determined based on the first range of number of layers and/or the second range of number of layers.

In an embodiment, the bit width of the indication information is determined based on a third number of layers within the first range of number of layers, and/or a fourth number of layers within the second range of number of layers;
where in case that the bit width of the indication information is determined based on the third number and the fourth number, the bit width of the indication information is a maximum number of the third number and the fourth number.

In an embodiment, in case that the target information includes the channel SRS resource,
if the number of codewords is a first number, a number of channel SRS resources indicated by the indication information is a value within a first range; and
if the number of codewords is a second number, a number of channel SRS resources indicated by the indication information is a value within a second range, where the first range and the second range are different.

In an embodiment, a bit width of the indication information is determined based on the first range and/or the second range.

In an embodiment, the bit width of the indication information is determined based on a fifth number of values included in the first range and/or a sixth number of values included in the second range;
where in case that the bit width of the indication information is determined based on the fifth number and the sixth number, the bit width of the indication information is a maximum number of the fifth number and the sixth number.

In an embodiment, determining the target information corresponding to the first transmission based on the parameter information and the indication information includes:
determining a number of antenna ports corresponding to the first transmission; and
determining the target information corresponding to the first transmission based on the parameter information and the indication information in case that the number of antenna ports is a given number.

An embodiment of the present application provides a network device, including a memory, a transceiver, and a processor;
where the memory is used for storing a computer program, the transceiver is used for receiving and transmitting data under control of the processor, and the processor is used for reading the computer program in the memory and performing following operations:
determining parameter information corresponding to a first transmission and indication information corresponding to target information corresponding to the first transmission, where the parameter information is used to determine a number of codewords, the target information includes one or more of a pre-coding matrix, a number of layers, or a channel sounding reference signaling (SRS) resource, and the indication information is used to indicate the target information; and
transmitting the parameter information and the indication information to a user equipment (UE).

In an embodiment, the parameter information includes one or more of the following:
information of the number of codewords;
modulation and coding scheme (MCS) indication information of the first transmission; or
redundancy version (RV) indication information of the first transmission.

In an embodiment, determining the indication information includes:
determining the indication information based on the target information.

In an embodiment, determining the indication information based on the target information includes:
determining the indication information based on the target information and a given mapping relationship;
where the given mapping relationship is used to represent a mapping relationship between the indication information and the target information.

In an embodiment, the given mapping relationship is expressed in one or more of the following forms:
codebook;
table;
bitmap; or
function.

In an embodiment, in case that the target information includes the pre-coding matrix,
if the number of codewords is a first number, the pre-coding matrix indicated by the indication information is a pre-coding matrix corresponding to a number of layers within a first range of number of layers; and
if the number of codewords is a second number, the pre-coding matrix indicated by the indication information is a pre-coding matrix corresponding to a number of layers within a second range of number of layers, where the first range of number of layers and the second range of number of layers are different.

In an embodiment, a maximum number of layers in the first range of number of layers and the second range of number of layers is determined based on one or more of the following:
a maximum number of layers determined based on restriction information for number of layers;
a number of layers configured by the network device; or
a maximum number of layers supported by the UE.

In an embodiment, a bit width of the indication information is determined based on the first range of number of layers and/or the second range of number of layers.

In an embodiment, in case that the target information includes the number of layers,
if the number of codewords is a first number, the number of layers indicated by the indication information is a number of layers within a first range of number of layers; and
if the number of codewords is a second number, the number of layers indicated by the indication information is a number of layers within a second range of number of layers.

In an embodiment, a bit width of the indication information is determined based on the first range of number of layers and/or the second range of number of layers.

In an embodiment, the bit width of the indication information is determined based on a third number of layers within the first range of number of layers, and/or a fourth number of layers within the second range of number of layers;
where in case that the bit width of the indication information is determined based on the third number and the fourth number, the bit width of the indication information is a maximum number of the third number and the fourth number.

In an embodiment, in case that the target information includes the channel SRS resource,
if the number of codewords is a first number, a number of channel SRS resources indicated by the indication information is a value within a first range; and
if the number of codewords is a second number, a number of channel SRS resources indicated by the indication information is a value within a second range, where the first range and the second range are different.

In an embodiment, a bit width of the indication information is determined based on the first range and/or the second range.

In an embodiment, the bit width of the indication information is determined based on a fifth number of values included in the first range and/or a sixth number of values included in the second range;
where in case that the bit width of the indication information is determined based on the fifth number and the sixth number, the bit width of the indication information is a maximum number of the fifth number and the sixth number.

An embodiment of the present application provides an apparatus for determining information, used in a user equipment (UE), including:
a receiving unit, used for receiving indication information and parameter information corresponding to a first transmission transmitted from a network device, where the parameter information is used to determine a number of codewords, the indication information is used to indicate target information, and the target information includes one or more of a pre-coding matrix, a number of layers, or a channel sounding reference signaling (SRS) resource; and
a processing unit, used for determining the target information corresponding to the first transmission based on the parameter information and the indication information.

In an embodiment, the parameter information includes one or more of the following:
information of the number of codewords;
modulation and coding scheme (MCS) indication information of the first transmission; or
redundancy version (RV) indication information of the first transmission.

In an embodiment, the processing unit is used for:
determining the number of codewords based on the parameter information; and determining the target information corresponding to the first transmission based on the number of codewords and the indication information.

In an embodiment, the processing unit is used for:
determining the target information corresponding to the first transmission based on the number of codewords, the indication information, and a given mapping relationship;
where the given mapping relationship is used to represent a mapping relationship between the indication information and the target information.

In an embodiment, the given mapping relationship is expressed in one or more of the following forms:
codebook;
table;
bitmap; or
function.

In an embodiment, in case that the target information includes the pre-coding matrix,
if the number of codewords is a first number, the pre-coding matrix indicated by the indication information is a pre-coding matrix corresponding to a number of layers within a first range of number of layers; and
if the number of codewords is a second number, the pre-coding matrix indicated by the indication information is a pre-coding matrix corresponding to a number of layers within a second range of number of layers, where the first range of number of layers and the second range of number of layers are different.

In an embodiment, a maximum number of layers in the first range of number of layers and the second range of number of layers is determined based on one or more of the following:
a maximum number of layers determined based on restriction information for number of layers;
a number of layers configured by the network device; or
a maximum number of layers supported by the UE.

In an embodiment, a bit width of the indication information is determined based on the first range of number of layers and/or the second range of number of layers.

In an embodiment, in case that the target information includes the number of layers,
if the number of codewords is a first number, the number of layers indicated by the indication information is a number of layers within a first range of number of layers; and
if the number of codewords is a second number, the number of layers indicated by the indication information is a number of layers within a second range of number of layers.

In an embodiment, a bit width of the indication information is determined based on the first range of number of layers and/or the second range of number of layers.

In an embodiment, the bit width of the indication information is determined based on a third number of layers within the first range of number of layers, and/or a fourth number of layers within the second range of number of layers;
where in case that the bit width of the indication information is determined based on the third number and the fourth number, the bit width of the indication information is a maximum number of the third number and the fourth number.

In an embodiment, in case that the target information includes the channel SRS resource,
if the number of codewords is a first number, a number of channel SRS resources indicated by the indication information is a value within a first range; and
if the number of codewords is a second number, a number of channel SRS resources indicated by the indication information is a value within a second range, where the first range and the second range are different.

In an embodiment, a bit width of the indication information is determined based on the first range and/or the second range.

In an embodiment, the bit width of the indication information is determined based on a fifth number of values included in the first range and/or a sixth number of values included in the second range;
where in case that the bit width of the indication information is determined based on the fifth number and the sixth number, the bit width of the indication information is a maximum number of the fifth number and the sixth number.

In an embodiment, the processing unit is used for:
determining a number of antenna ports corresponding to the first transmission; and
determining the target information corresponding to the first transmission based on the parameter information and the indication information in case that the number of antenna ports is a given number.

An embodiment of the present application provides an apparatus for determining information, used in a network device, including:
a determining unit, used for determining parameter information corresponding to a first transmission and indication information corresponding to target information corresponding to the first transmission, where the parameter information is used to determine a number of codewords, the target information includes one or more of a pre-coding matrix, a number of layers, or a channel sounding reference signaling (SRS) resource, and the indication information is used to indicate the target information; and
a transmitting unit, used for transmitting the parameter information and the indication information to a user equipment (UE).

In an embodiment, the parameter information includes one or more of the following:
information of the number of codewords;
modulation and coding scheme (MCS) indication information of the first transmission; or
redundancy version (RV) indication information of the first transmission.

In an embodiment, the determining unit is used for determining the indication information based on the target information.

In an embodiment, the determining unit is used for:
determining the indication information based on the target information and a given mapping relationship;
where the given mapping relationship is used to represent a mapping relationship between the indication information and the target information.

In an embodiment, the given mapping relationship is expressed in one or more of the following forms:
codebook;
table;
bitmap; or
function.

In an embodiment, in case that the target information includes the pre-coding matrix,
if the number of codewords is a first number, the pre-coding matrix indicated by the indication information is a pre-coding matrix corresponding to a number of layers within a first range of number of layers; and
if the number of codewords is a second number, the pre-coding matrix indicated by the indication information is a pre-coding matrix corresponding to a number of layers within a second range of number of layers, where the first range of number of layers and the second range of number of layers are different.

In an embodiment, a maximum number of layers in the first range of number of layers and the second range of number of layers is determined based on one or more of the following:
a maximum number of layers determined based on restriction information for number of layers;
a number of layers configured by the network device; or
a maximum number of layers supported by the UE.

In an embodiment, a bit width of the indication information is determined based on the first range of number of layers and/or the second range of number of layers.

In an embodiment, in case that the target information includes the number of layers,
if the number of codewords is a first number, the number of layers indicated by the indication information is a number of layers within a first range of number of layers; and
if the number of codewords is a second number, the number of layers indicated by the indication information is a number of layers within a second range of number of layers.

In an embodiment, a bit width of the indication information is determined based on the first range of number of layers and/or the second range of number of layers.

In an embodiment, the bit width of the indication information is determined based on a third number of layers within the first range of number of layers, and/or a fourth number of layers within the second range of number of layers;
where in case that the bit width of the indication information is determined based on the third number and the fourth number, the bit width of the indication information is a maximum number of the third number and the fourth number.

In an embodiment, in case that the target information includes the channel SRS resource,
if the number of codewords is a first number, a number of channel SRS resources indicated by the indication information is a value within a first range; and
if the number of codewords is a second number, a number of channel SRS resources indicated by the indication information is a value within a second range, where the first range and the second range are different.

In an embodiment, a bit width of the indication information is determined based on the first range and/or the second range.

In an embodiment, the bit width of the indication information is determined based on a fifth number of values included in the first range and/or a sixth number of values included in the second range;
where in case that the bit width of the indication information is determined based on the fifth number and the sixth number, the bit width of the indication information is a maximum number of the fifth number and the sixth number.

An embodiment of the present application provides a processor-readable storage medium, storing a computer program, where the computer program is used for causing a processor to perform the steps of any of the methods described above.

In the methods and apparatuses for determining information, the UE and the network device provided by the embodiments of the present application, the UE receives the indication information and the parameter information corresponding to the first transmission transmitted from the network device, where the parameter information is used to determine the number of codewords, the indication information is used to indicate the target information, and the target information includes one or more of the pre-coding matrix, the number of layers, or the channel SRS resource; and the UE determines the target information corresponding to the first transmission based on the parameter information and the indication information. As such, the target information corresponding to the first transmission is determined in combination with the parameter information for determining the number of codewords of the first transmission, which effectively reduces the overhead of the indication information, and solves the problem in large overhead of indication information for indicating the pre-coding matrix, the number of layers or the channel SRS resources induced by the increased number of antenna ports, and then the overhead of the indication information is reduced.

### BRIEF DESCRIPTION OF THE DRAWINGS

To clearly illustrate the solutions in the embodiments of the present application, the drawings used in the description of the embodiments are briefly described below. The drawings in the following description are only some embodiments of the present application, and other drawings may be obtained according to these drawings without any creative effort for those skilled in the art.
FIG. 1 is a first schematic flowchart of a method for determining information according to an embodiment of the present application;
FIG. 2 is a second schematic flowchart of a method for determining information according to an embodiment of the present application;
FIG. 3 is a schematic structural diagram of a user equipment (UE) according to an embodiment of the present application;
FIG. 4 is a schematic structural diagram of a network device according to an embodiment of the present application;
FIG. 5 is a first schematic structural diagram of an apparatus for determining information according to an embodiment of the present application; and
FIG. 6 is a second schematic structural diagram of an apparatus for determining information according to an embodiment of the present application.

### DETAILED DESCRIPTION

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

The term "multiple" in the embodiments of the present application refers to two or more than two, and other quantifiers are similar thereto.

The solutions according to the embodiments of the present application may be applicable to various systems, especially 5G system. For example, the applicable systems may be a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These various systems include a terminal device and a network device, and may further include a core network part, such as an evolved packet system (EPS), a 5G system (5GS), and the like.

The terminal in the embodiments of the present application may be a device that provides voice and/or data connectivity to a user, a handheld device with a wireless connection function, or other processing devices connected to a wireless modem. In different systems, the names of the terminal may be different. For example, in the 5G system, the terminal may be called as a user equipment (UE). A wireless terminal device may communicate with one or more core networks (CNs) via a radio access network (RAN), and the wireless terminal device may be a mobile terminal device, such as a mobile phone (or cellular phone), or a computer with a mobile terminal device, e.g., a portable mobile device, a pocket-sized mobile device, a handheld mobile device, a computer-built mobile device or a vehicle-mounted mobile device, which exchanges language and/or data with the radio access network. For example, a personal communication service (PCS) phone, a radio phone, a session initiated protocol (SIP) phone, a wireless local loop (WLL) station, a personal digital assistant (PDA) and other devices. The wireless terminal device may also be called a system, a subscriber unit, a subscriber station, a mobile station, a mobile, a remote station, an access point, a remote terminal, an access terminal, a user terminal, a user agent, or a user device, which is not limited in the embodiments of the present application.

The network device in the embodiments of the present application may be a base station, and the base station may include multiple cells providing services for the terminal. Depending on the specific scenario, the base station may be called an access point, or a device communicating with the wireless terminal device through one or more sectors on the air interface in the access network, or other names. The network device may be used for exchanging the received air frames with Internet Protocol (IP) packets, and acting as a router between the wireless terminal device and the rest of the access network, where the rest of the access network may include an IP communication network. The network device may also coordinate attribute management for the air interface. For example, the network device in the embodiments of the present application may be a base transceiver station (BTS) in a global system for mobile communications (GSM) or a code division multiple access (CDMA), a node B in a wide-band code division multiple access (WCDMA), an evolutional node B (eNB or e-Node B) in a long term evolution (LTE) system, a 5G base station (gNB) in 5G network architecture (next generation system), a home evolved node B (HeNB), a relay node, a femto, or a pico base station (pico), etc., which is not limited in the embodiments of the present application. In some network structures, the network device may include a centralized unit (CU) node and a distributed unit (DU) node, and the centralized unit and the distributed unit may be arranged to be geographically separated.

For example, in embodiments of the present application, a multi-input multi-output (MIMO) transmission may be performed between the network device and the terminal device by using one or more antennas. The MIMO transmission may be single-user MIMO (SU-MIMO) or multi-user MIMO (MU-MIMO). Depending on the form and number of antenna combinations, MIMO transmission may be 2D-MIMO, 3D-MIMO, FD-MIMO or massive-MIMO, and may also be diversity transmission, pre-coding transmission, beamforming transmission, etc. In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

The term "multiple" in the embodiments of the present application refers to two or more than two, and other quantifiers are similar thereto.

The solutions according to the embodiments of the present application may be applicable to various systems, especially 5G system. For example, the applicable systems may be a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These various systems include a terminal device and a network device, and may further include a core network part, such as an evolved packet system (EPS), a 5G system (5GS), and the like.

The terminal in the embodiments of the present application may be a device that provides voice and/or data connectivity to a user, a handheld device with a wireless connection function, or other processing devices connected to a wireless modem. In different systems, the names of the terminal may be different. For example, in the 5G system, the terminal may be called as a user equipment (UE). A wireless terminal device may communicate with one or more core networks (CNs) via a radio access network (RAN), and the wireless terminal device may be a mobile terminal device, such as a mobile phone (or cellular phone), a computer with mobile terminal device, e.g., a portable mobile device, a pocket-sized mobile device, a handheld mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal device may also be called a system, a subscriber unit, a subscriber station, a mobile station, a mobile, a remote station, an access point, a remote terminal, an access terminal, a user terminal, a user agent, or a user device, which is not limited in the embodiments of the present application.

The network device in the embodiments of the present application may be a base station, and the base station may include multiple cells providing services for the terminal. Depending on the specific scenario, the base station may be called an access point, or a device communicating with a wireless terminal device through one or more sectors on the air interface in the access network, or other names. The network device may be used for exchanging received air frames with Internet Protocol (IP) packets, and acting as a router between the wireless terminal device and the rest of the access network, where the rest of the access network may include an IP communication network. The network device may also coordinate attribute management for the air interface. For example, the network device in the embodiments of the present application may be a base transceiver station (BTS) in a global system for mobile communications (GSM) or a code division multiple access (CDMA), a node B in a wide-band code division multiple access (WCDMA), an evolutional node B (eNB or e-Node B) in a long term evolution (LTE) system, a 5G base station (gNB) in 5G network architecture (next generation system), a home evolved node B (HeNB), a relay node, a femto, or a pico base station (pico), etc., which is not limited in the embodiments of the present application. In some network structures, the network device may include a centralized unit (CU) node and a distributed unit (DU) node, and the centralized unit and the distributed unit may be arranged to be geographically separated.

For example, in embodiments of the present application, a multi-input multi-output (MIMO) transmission may be performed between the network device and the terminal device by using one or more antennas. The MIMO transmission may be single-user MIMO (SU-MIMO) or multi-user MIMO (MU-MIMO). Depending on the form and number of antenna combinations, MIMO transmission may be 2D-MIMO, 3D-MIMO, FD-MIMO or massive-MIMO, and may also be diversity transmission, pre-coding transmission, beamforming transmission, etc.

In some radio communication systems, such as a new radio (NR) system, a long term evolution (LTE) system, etc., single codeword transmission and two codewords transmission are supported. The number of transport blocks (TBs) included in downlink control information (DCI) is one or two, and one TB may be understood as one codeword (CW).

In a traditional NR system, only a physical downlink share channel (PDSCH) supports two codewords transmission. The pre-coding of codebook-based physical uplink share channel (PUSCH) transmission is determined based on the pre-coding matrix indicated by the base station, and the pre-coding of non-codebook-based PUSCH transmission is determined based on the sounding reference signaling (SRS) resources indicated by the base station, and the number of transmission layers is equal to the number of SRS resources indicated by the base station.

As the number of antenna ports supported by PUSCH transmission increases, the number of pre-coding matrices, the number of layers, and the number of SRS resources corresponding to PUSCH transmission increase. As a result, in case that the pre-coding matrix, the number of layers, or the channel SRS resources are indicated through uplink scheduling information, the overhead of the indication information for indicating the pre-coding matrix, the number of layers, or the channel SRS resources in the uplink scheduling information is large.

To solve the problem in large overhead of indication information for indicating the pre-coding matrix, the number of layers or the channel SRS resources induced by the increased number of antenna ports, an embodiment of the present application provides a method for determining information. In this method, a user equipment (UE) receives indication information and parameter information corresponding to a first transmission transmitted from a network device, where the parameter information is used to determine a number of codewords, the indication information is used to indicate target information, and the target information includes one or more of a pre-coding matrix, a number of layers or channel SRS resources; the UE determines the target information corresponding to the first transmission based on the parameter information and the indication information. As such, the target information corresponding to the first transmission is determined in combination with the parameter information used to determine the number of codewords of the first transmission, which effectively reduces the overhead of the indication information, and solves the problem in large overhead of indication information for indicating the pre-coding matrix, the number of layers or the channel SRS resources induced by the increased number of antenna ports, and then the overhead of the indication information is reduced.

In an example, before the solutions provided by the embodiments of the present application are performed, the number of antenna ports corresponding to the first transmission may be determined first. In case that the number of antenna ports corresponding to the first transmission is a given number, for example, the number of antenna ports is 8, the method for determining information provided by the embodiments of the present application may be performed, that is, the target information corresponding to the first transmission is determined based on the parameter information and the indication information; otherwise, a traditional method for determining information may be used to determine the target information corresponding to the first transmission, which may be specifically set according to actual needs.

The solutions in the embodiments of the present application are clearly and completely described in the following with reference to the accompanying drawings in the embodiments of the present application. These embodiments are only a part of the embodiments of the present application, and not all of the embodiments. All other embodiments obtained by those skilled in the art based on the embodiments of the present application without any creative effort belong to the scope of the present application.

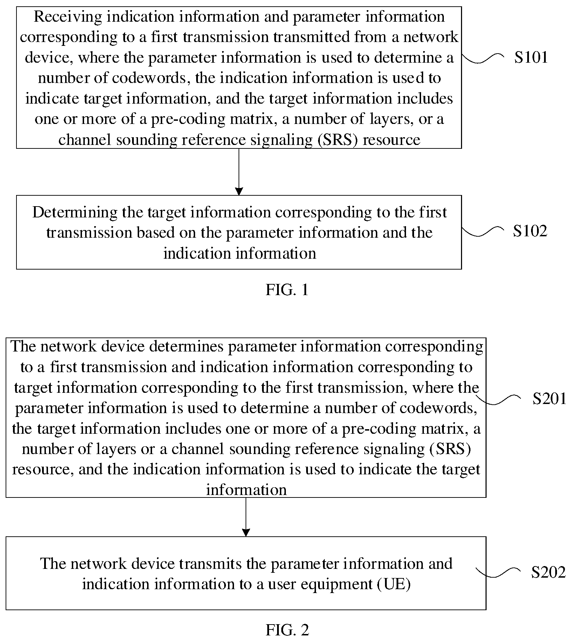

FIG. 1 is a first schematic flowchart of a method for determining information according to an embodiment of the present application. The method for determining information may be performed by a user equipment (UE), such as a mobile phone, etc. Referring to FIG. 1, the method for determining information includes:
S101: receiving indication information and parameter information corresponding to a first transmission transmitted from a network device, where the parameter information is used to determine a number of codewords, the indication information is used to indicate target information, and the target information includes one or more of a pre-coding matrix, a number of layers, or a channel sounding reference signaling (SRS) resource.

For example, the first transmission may be a physical uplink share channel (PUSCH) transmission or a physical downlink share channel (PDSCH) transmission, etc., which may be specifically set according to actual needs. Taking PUSCH transmission as an example, it may be: transmitting data on a PUSCH or transmitting information carried by PUSCH, etc.

For example, in any of the embodiments of the present application, the parameter information may include one or more of the following:
information of the number of codewords;
modulation and coding scheme (MCS) indication information of the first transmission; or
redundancy version (RV) indication information of the first transmission.

In an embodiment, in case that the parameter information includes the information of the number of codewords, it may be understood that the network device explicitly indicates the number of codewords of the first transmission to the UE; in case that the parameter information includes the MCS indication information of the first transmission and/or the RV indication information of the first transmission, it may be understood that the network device implicitly indicates the number of codewords of the first transmission to the UE.

In an embodiment, one codeword corresponds to one transport block (TB). Taking the first transmission as PUSCH transmission as an example, in case of determining the number of codewords, if the control information corresponding to only one TB in the scheduling information of the PUSCH transmission is enabled, it may be determined that the number of codewords of PUSCH transmission is 1, that is, in the two TBs included in the scheduling information of the PUSCH transmission, the control information corresponding to another TB is disabled. If the control information corresponding to two TBs in the scheduling information of the PUSCH transmission is enabled, it may be determined that the number of codewords of PUSCH transmission is 2.

In an embodiment of the present application, the first transmission supporting 2 codewords is just taken as an example for illustration, but it is not limited to 2 codewords, and may also be 3 codewords, 4 codewords, etc., and may be specifically set according to actual needs.

After the parameter information for determining the number of codewords and the indication information for indicating the target information are obtained respectively, the following S102 is performed.

S102: determining the target information corresponding to the first transmission based on the parameter information and the indication information.

For example, in any of the embodiments of the present application, in case of determining the target information corresponding to the first transmission based on the parameter information and the indication information, the number of codewords may be first determined based on the parameter information; and then the target information corresponding to the first transmission is determined based on the number of codewords and the indication information.

For example, in case of determining the number of codewords based on the parameter information, if the MCS indication information and RV indication information corresponding to one TB correspond to given values, it means that the target information corresponding to the TB is disabled. For example, in case that the MCS indication information corresponding to one TB is MCS=26 and the RV indication information corresponding to the TB is RV=1, it means that the target information corresponding to the TB is disabled. For another example, in case that the MCS indication information corresponding to one TB is MCS=0 and the RV indication information corresponding to the TB is RV=0, it means that the target information corresponding to the TB is disabled. Otherwise, it means that the control information corresponding to the TB is enabled, which may be set according to actual needs. In this example, the non-enabling of the target information of one TB means that the target information cannot be used for transmission.

For example, in case of determining the target information corresponding to the first transmission based on the parameter information and the indication information, if the parameter information is the MCS indication information and the RV indication information corresponding to the TB, the target information corresponding to the first transmission is determined based on the MCS indication information and the RV indication information corresponding to the TB.

For example, the indication information may be indication information obtained by encoding based on a preset bit encoding.

For example, in any of the embodiments of the present application, in case of determining the target information corresponding to the first transmission based on the number of codewords and the indication information, a given mapping relationship may be first determined, where the given mapping relationship is used to represent a mapping relationship between the indication information and the target information; and then the target information corresponding to the first transmission is determined based on the number of codewords, the indication information, and the given mapping relationship, where the given mapping relationship is used to represent the mapping relationship between the indication information and the target information.

For example, the given mapping relationship may be expressed in one or more of the following forms:
codebook;
table;
bitmap; or
function.

It should be noted that, in case of describing the expression of the given mapping relationship, the embodiments of the present application only take one or more of the above-mentioned forms as an example for description, but it does not mean that the embodiments of the present application are limited thereto.

It may be seen that in the embodiments of the present application, the UE receives the indication information and the parameter information corresponding to the first transmission transmitted from the network device, where the parameter information is used to determine the number of codewords, the indication information is used to indicate the target information, and the target information includes one or more of the pre-coding matrix, the number of layers, or the channel SRS resource; and the UE determines the target information corresponding to the first transmission based on the parameter information and the indication information. As such, the target information corresponding to the first transmission is determined in combination with the parameter information for determining the number of codewords of the first transmission, which effectively reduces the overhead of the indication information, and solves the problem in large overhead of indication information for indicating the pre-coding matrix, the number of layers or the channel SRS resources induced by the increased number of antenna ports, and then the overhead of the indication information is reduced.

In order to facilitate understanding of how to determine the target information corresponding to the first transmission based on the number of codewords, the indication information, and the given mapping relationship in the embodiments of the present application, two different scenarios are described below. For example, one possible scenario is a codebook-based PUSCH transmission scenario, and another possible scenario is a non-codebook-based PUSCH transmission.

For example, in case that the network device configures a codebook-based PUSCH transmission for the UE, a target indication field is a second transmission pre-coding matrix indicator (TPMI) field; in case that the network device configures a non-codebook-based PUSCH transmission for the UE, a target indication field is a second SRS field.

For example, in one possible scenario, namely, a codebook-based PUSCH transmission scenario, it is generally necessary to determine a pre-coding matrix and the number of layers corresponding to the PUSCH transmission, and perform PUSCH transmission based on the pre-coding matrix and/or the number of layers corresponding to the PUSCH transmission.

In any of the embodiments of the present application, in case of determining the pre-coding matrix and the number of layers corresponding to the PUSCH transmission, the pre-coding matrix and the number of layers may be indicated separately, that is, each of the pre-coding matrix and the number of layers corresponds to its own indication information; or, they may be indicated jointly, that is, the pre-coding matrix and the number of layers correspond to one piece of indication information, and the pre-coding matrix and the number of layers may be determined based on the indication information simultaneously.

For example, in this possible scenario, in order to facilitate understanding of determining the target information corresponding to the first transmission based on the number of codewords, the indication information, and the given mapping relationship, there may be at least the following three possible implementations.

In a possible implementation, the target information corresponding to the PUSCH transmission includes a pre-coding matrix. In case of determining the pre-coding matrix corresponding to the first transmission based on the number of codewords, the indication information, and the given mapping relationship, if the number of codewords is a first number, the pre-coding matrix indicated by the indication information is a pre-coding matrix corresponding to the number of layers within a first range of number of layers.

If the number of codewords is a second number, the pre-coding matrix indicated by the indication information is a pre-coding matrix corresponding to the number of layers within a second range of number of layers, where the first range of number of layers and the second range of number of layers are different.

For example, in any of the embodiments of the present application, a maximum number of layers in the first range of number of layers and the second range of number of layers is determined based on one or more of the following:
a maximum number of layers determined based on restriction information for number of layers;
a number of layers configured by a network device; or
a maximum number of layers supported by the UE.

In any of the embodiments of the present application, the restriction information for number of layers may be used to indicate information of the maximum number of layers, or may be information for indicating a value range of the number of layers. For example, it may be used to indicate that the PUSCH transmission may only be 1, 2, 4, 6 layers, etc.

For example, in any of the embodiments of the present application, a bit width of the indication information for indicating the pre-coding matrix is determined based on the first range of number of layers and/or the second range of number of layers.

For example, in case that the bit width of the indication information is determined based on the first range of number of layers and the second range of number of layers, the number of pre-coding matrices corresponding to the number of layers within the first range of number of layers and the number of pre-coding matrices corresponding to the number of layers within the second range of number of layers may be determined respectively, and then the maximum number of the two numbers is determined as the bit width of the indication information for indicating the pre-coding matrix.

For example, in any of the embodiments of the present application, the number of antenna ports supported by the PUSCH transmission being 8 is taken as an example, in case that the number of codewords of PUSCH is 1, the pre-coding matrix indicated by the indication information is a pre-coding matrix corresponding to the number of layers not greater than 4, that is, in case that the number of codewords is 1, the first range of number of layers may be 1 to 4; in case that the number of codewords of PUSCH is 2, the pre-coding matrix indicated by the indication information is a pre-coding matrix corresponding to the number of layers greater than 4, that is, in case that the number of codewords is 2, the first range of number of layers may be 5 to 8. It may be specifically set according to actual needs. Here, the embodiments of the present application are only illustrated by taking that as an example, but it does not mean that the embodiments of the present application are limited to that.

In this possible implementation, taking the given mapping relationship including a form of codebook as an example, for example, in case of determining the pre-coding matrix corresponding to the first transmission based on the number of codewords, the indication information, and a given codebook, the following Embodiment I may be referred.

### Embodiment I

Step 1: a scheduling message for PUSCH transmission transmitted from a network device is received, where the scheduling message includes parameter information and indication information for PUSCH transmission, the parameter information is used to determine the number of codewords, and the indication information is used to indicate a pre-coding matrix.

Step 2: in case that it is determined that the number of codewords of PUSCH is 1, the pre-coding matrix corresponding to the PUSCH transmission is determined based on the indication information and a first codebook; in case that it is determined that the number of codewords of PUSCH is 2, the pre-coding matrix corresponding to the PUSCH transmission is determined based on the indication information and a second codebook.

For example, the first codebook may be a codebook consisting of pre-coding matrices corresponding to the number of layers not greater than 4, and the second codebook may be a codebook consisting of pre-coding matrices corresponding to the number of layers greater than 4.

For example, in case that the given mapping relationship includes a form of codebook, the bit width of the indication information for indicating the pre-coding matrix is determined based on the number of pre-coding matrices included in a first codebook and/or the number of pre-coding matrices included in a second codebook.

For example, in any of the embodiments of the present application, the bit width of the indication information for indicating the pre-coding matrix may be 2, that is, the indication information has 2 bits, which may be specifically set according to actual needs.

For example, in case that the bit width of the indication information is determined based on the number of pre-coding matrices included in the first codebook and the number of pre-coding matrices included in the second codebook, the maximum number of the two numbers may be determined as the bit width of the indication information for indicating the pre-coding matrix.

In this possible implementation, the given mapping relationship including a form of table is taken as an example, for example, in case of determining the pre-coding matrix corresponding to the first transmission based on the number of codewords, the indication information, and a given codebook, the following Embodiment II may be referred.

### Embodiment II

Step 1: a scheduling message for PUSCH transmission transmitted from a network device is received, where the scheduling message includes parameter information and indication information for PUSCH transmission, the parameter information is used to determine the number of codewords, and the indication information is used for indicating a pre-coding matrix.

Step 2: in case that it is determined that the number of codewords of PUSCH is 1, the pre-coding matrix corresponding to the PUSCH transmission is determined based on the indication information and a first table; in case that it is determined that the number of codewords of PUSCH is 2, the pre-coding matrix corresponding to the PUSCH transmission is determined based on the indication information and a second table.

For example, the number of layers corresponding to the pre-coding matrix indicated by any entry in the first table is not greater than 4, and the number of layers corresponding to the pre-coding matrix indicated by any entry in the second table is greater than 4.

For example, the number of antenna ports being 8 is taken as an example, the information of the number of layers may have 2 bits. In case that it is determined that the number of codewords of PUSCH is 1, if the pre-coding matrix corresponding to the PUSCH transmission is determined based on the indication information and the first table, the following Table 1 may be referred, that is, the scenario of the number of codewords of PUSCH being 1 corresponds to the first table. In case that it is determined that the number of codewords of PUSCH is 2, if the pre-coding matrix corresponding to the PUSCH transmission is determined based on the indication information and the second table, the following Table 2 may be referred, that is, the scenario of the number of codewords of PUSCH being 2 corresponds to the second table.

**Table 1**

| Indication information | Number of layers |
|---|---|
| 0 | 1 |
| 1 | 2 |
| 2 | 3 |
| 3 | 4 |

With reference to Table 1, in case that it is determined that the number of codewords of PUSCH is 1, if the indication information is 0, a corresponding pre-coding matrix is determined as a pre-coding matrix in pre-coding information corresponding to the number of layers being 1; in case that it is determined that the number of codewords of PUSCH is 1, if the indication information is 1, a corresponding pre-coding matrix is determined as a pre-coding matrix in pre-coding information corresponding to the number of layers being 2; in case that it is determined that the number of codewords of PUSCH is 1, if the indication information is 2, a corresponding pre-coding matrix is determined as a pre-coding matrix in pre-coding information corresponding to the number of layers being 3; in case that it is determined that the number of codewords of PUSCH is 1, if the indication information is 3, a corresponding pre-coding matrix is determined as a pre-coding matrix in pre-coding information corresponding to the number of layers being 4.

**Table 2**

| Indication information | Number of layers |
|---|---|
| 0 | 5 |
| 1 | 6 |
| 2 | 7 |
| 3 | 8 |

With reference to Table 2, in case that it is determined that the number of codewords of PUSCH is 2, if the indication information is 0, a corresponding pre-coding matrix is determined as a pre-coding matrix in pre-coding information corresponding to the number of layers being 5; in case that it is determined that the number of codewords of PUSCH is 2, if the indication information is 1, a corresponding pre-coding matrix is determined as a pre-coding matrix in pre-coding information corresponding to the number of layers being 6; in case that it is determined that the number of codewords of PUSCH is 2, if the indication information is 2, a corresponding pre-coding matrix is determined as a pre-coding matrix in pre-coding information corresponding to the number of layers being 7; in case that it is determined that the number of codewords of PUSCH is 2, if the indication information is 3, a corresponding pre-coding matrix is determined as a pre-coding matrix in pre-coding information corresponding to the number of layers being 8.

In this possible implementation, the given mapping relationship including a coding scheme is taken as an example, for example, in case of determining the pre-coding matrix corresponding to the first transmission based on the number of codewords, the indication information, and a given codebook, the following Embodiment III may be referred.

### Embodiment III

Step 1: a scheduling message for PUSCH transmission transmitted from a network device is received, where the scheduling message includes parameter information and indication information for PUSCH transmission, the parameter information is used to determine the number of codewords, and the indication information is used to indicate a pre-coding matrix.

Step 2: in case that it is determined that the number of codewords of PUSCH is 1, the pre-coding matrix corresponding to the PUSCH transmission is determined based on the indication information and a first coding scheme; in case that it is determined that the number of codewords of PUSCH is 2, the pre-coding matrix corresponding to the PUSCH transmission is determined based on the indication information and a second coding scheme.

For example, the number of the layers corresponding to a value of any piece of indication information in the first coding scheme is not greater than 4; the number of the layers corresponding to a value of any piece of indication information in the second coding scheme is greater than 4.

Based on the above description, it may be seen that in case that *maxRank* is greater than 4 and the number of codewords of PUSCH is 2, the pre-coding matrix corresponding to the PUSCH transmission is determined based on the second table, and/or the pre-coding matrix corresponding to the PUSCH transmission is determined based on the second codebook; in case that the number of codewords of PUSCH is 1, the pre-coding matrix corresponding to the PUSCH transmission is determined based on the first table, and/or the pre-coding matrix corresponding to the PUSCH transmission is determined based on the first codebook;
and/or,
in case that *maxRank* is smaller than or equal to 4, the pre-coding matrix corresponding to the PUSCH transmission is determined based on a third table, and/or the pre-coding matrix corresponding to the PUSCH transmission is determined based on a third codebook.

The number of layers corresponding to a pre-coding matrix indicated by any entry for indicating the pre-coding matrix in the third table is one item of 1 to *maxRank*; the third codebook is a codebook composed of pre-coding matrices with the number of layers from 1 to *maxRank.*

*maxRank* is one or more of the following: the maximum number of layers determined based on the restriction information for number of layers, or the maximum number of MIMO layers that PUSCH may be scheduled, that is, the number of layers configured by the network device; or, the maximum number of MIMO layers for PUSCH transmission supported by the UE, that is, the maximum number of layers supported by the UE.

For example, in any of the embodiments of the present application, the types of DCI format 0_1 and DCI format 0_2 used for scheduling PUSCH may correspond to the same *maxRank* parameter or different *maxRank* parameters. For example, one of them is indicated by *maxRankDCI-0-1* and another is indicated by *maxRankDCI-0-2.* The specific settings may be made according to actual needs, which is not limited in the embodiments of the present application.

In another possible implementation, the target information corresponding to the PUSCH transmission includes the number of layers. In case that the number of layers corresponding to the first transmission is determined based on the number of codewords, the indication information, and the given mapping relationship, if the number of codewords is the first number, the number of layers indicated by the indication information is the number of layers within the first range of number of layers.

If the number of codewords is the second number, the number of layers indicated by the indication information is the number of layers within the second range of number of layers, where the first range of number of layers and the second range of number of layers are different.

For example, in any of the embodiments of the present application, the maximum number of layers in the first range of number of layers and the second range of number of layers is determined based on one or more of the following:
a maximum number of layers determined based on restriction information for number of layers;
a number of layers configured by a network device; or
a maximum number of layers supported by the UE.

For example, in any of the embodiments of the present application, the bit width of the indication information for indicating the pre-coding matrix is determined based on the first range of number of layers and/or the second range of number of layers.

For example, in case that the bit width of the indication information is determined based on the first range of number of layers and the second range of number of layers, a third number of layers within the first range of number of layers and/or a fourth number of layers within the second range of number of layers may be determined separately, and a maximum number of the third number and the fourth number is determined as the bit width of the indication information for indicating the number of layers.

For example, in any of the embodiments of the present application, the number of antenna ports supported by PUSCH transmission being 8 is taken as an example, in case that the number of codewords of PUSCH is 1, the number of layers indicated by the indication information is not greater than 4, that is, in case that the number of codewords is 1, the first range of number of layers may be 1 to 4; in case that the number of codewords of PUSCH is 2, the number of layers indicated by the indication information is greater than 4, that is, in case that the number of codewords is 2, the second range of number of layers may be 5 to 8. The specific setting may be made based on actual needs. Here, the embodiments of the present application are only described by taking that as an example, but it does not mean that the embodiments of the present application are limited to that.

It should be noted that, in this possible implementation, the given mapping relationship may be expressed in one or more of the following forms:
table;
bitmap; or
function.

It should be noted that in case that the given mapping relationship is expressed in the form of table, its specific implementation is similar to the specific implementation of the above scenario in which the table is used in case that the target information includes the pre-coding matrix. The above related description may be referred, and the same details are not repeated in the embodiments of the present application.

In another possible implementation, the target information corresponding to the PUSCH transmission includes the pre-coding matrix and the number of layers. In case of determining the pre-coding matrix and the number of layers corresponding to the first transmission based on the number of codewords, the indication information, and the given mapping relationship, if the number of codewords is the first number, the pre-coding matrix indicated by the indication information is the pre-coding matrix corresponding to the number of layers within the first range of number of layers, and the number of layers indicated by the indication information is the number of layers within the first range of number of layers; if the number of codewords is the second number, the pre-coding matrix indicated by the indication information is the pre-coding matrix corresponding to the number of layers within the second range of number of layers, and the number of layers indicated by the indication information is the number of layers within the second range of number of layers.

It should be noted that in this possible implementation, the implementation of determining the pre-coding matrix corresponding to the first transmission based on the number of codewords, the indication information, and the given mapping relationship is similar to the implementation of, in case that the target information includes the pre-coding matrix, determining the pre-coding matrix corresponding to the first transmission based on the number of codewords, the indication information, and the given mapping relationship in the above possible implementation. The above related description may be referred, and the same details are not repeated in the embodiments of the present application.

The implementation of determining the number of layers corresponding to the first transmission based on the number of codewords, the indication information, and the given mapping relationship is similar to the implementation of, in case that the target information includes the number of layers, determining the number of layers corresponding to the first transmission based on the number of codewords, the indication information, and the given mapping relationship in the above possible implementation. The above related description may be referred, and the same details are not repeated in the embodiments of the present application.

In any of the embodiments of the present application, in case that the target information includes the pre-coding matrix and the number of layers, the pre-coding matrix and the number of layers may be indicated separately, or may be indicated jointly, which may be set according to actual needs. Separate indication may be understood as the pre-coding matrix and the number of layers are indicated by two pieces of indication information respectively, that is, each of the pre-coding matrix and the number of layers corresponds to its own indication information. Joint indication may be understood as the coding matrix and the number of layers are indicated by the same indication information respectively, that is, the coding matrix and the number of layers correspond to one piece of indication information and the pre-coding matrix and the number of layers may be determined simultaneously based on the indication information.

In case that the pre-coding matrix and the number of layers are indicated separately, for example, if the number of codewords of PUSCH is 1, the pre-coding matrix indicated by the indication information for indicating the pre-coding matrix is the number of layers not greater than 4, and the pre-coding matrix indicated by the indication information for indicating the number of layers is the pre-coding matrix corresponding to the number of layers not greater than 4; if the number of codewords of PUSCH is 2, the pre-coding matrix indicated by the indication information for indicating the pre-coding matrix is the number of layers greater than 4, and the pre-coding matrix indicated by the indication information for indicating the number of layers is the pre-coding matrix corresponding to the number of layers greater than 4.

In case that the pre-coding matrix and the number of layers are indicated jointly, for example, if the number of codewords of PUSCH is 1, the pre-coding matrix indicated by the indication information is the number of layers not greater than 4, and the indicated pre-coding matrix is the pre-coding matrix corresponding to the number of layers not greater than 4; if the number of codewords of PUSCH is 2, the pre-coding matrix indicated by the indication information is the number of layers greater than 4, and the indicated pre-coding matrix is the pre-coding matrix corresponding to the number of layers greater than 4.

For example, in another possible scenario, that is, a non-codebook-based PUSCH transmission scenario. In the non-codebook-based PUSCH transmission scenario, it is generally necessary to determine the channel SRS resources and the number of layers corresponding to the PUSCH transmission, and further determine the pre-coding matrix based on the channel SRS resources, and then perform PUSCH transmission based on the pre-coding matrix and/or the number of layers corresponding to the PUSCH transmission.

It should be noted that in this scenario, the specific implementation of determining the number of layers corresponding to the PUSCH transmission is similar to the specific implementation of determining the number of layers corresponding to the codebook-based PUSCH transmission described above, and the reference may be made to the above-mentioned related descriptions. The same details are not repeated in the embodiments of the present application. How to determine the channel SRS resources corresponding to PUSCH transmission in the non-codebook-based PUSCH transmission scenario is described in detail below.

For example, in case that the target information corresponding to the PUSCH transmission includes SRS resources, in case of determining the pre-coding matrix corresponding to the first transmission based on the number of codewords, the indication information, and the given mapping relationship, if the number of codewords is the first number, the number of channel SRS resources indicated by the indication information is a value within a first range; if the number of codewords is the second number, the number of channel SRS resources indicated by the indication information is a value within a second range, where the first range and the second range are different, a fifth number is the number of values within the first range, and a sixth number is the number of values within the second range.

For example, in any of the embodiments of the present application, the bit width of the indication information for the channel SRS resources is determined based on the first range and/or the second range.

For example, in case of determining the bit width of the indication information based on the first range and the second range, the fifth number of values included in the first range and the sixth number of values included in the second range may be determined respectively, and the maximum number of the two numbers is determined as the bit width of the indication information for indicating the channel SRS resources.

For example, in any of the embodiments of the present application, the number of antenna ports supported by PUSCH transmission being 8 is taken as an example, in case that the number of codewords of PUSCH is 1, the channel SRS resources indicated by the indication information are channel SRS resources with the number of SRS resources being not greater than 4, that is, in case that the number of codewords is 1, the first range may be a range in which the number of SRS resources is not greater than 4; in case that the number of codewords of PUSCH is 2, the channel SRS resources indicated by the indication information are channel SRS resources with the number of SRS resources being greater than 4, that is, in case that the number of codewords is 2, the second range may be a range in which the number of SRS resources is greater than 4, which may be specifically set according to actual needs. Here, the embodiments of the present application are only described by taking that as an example, but it does not mean that the embodiments of the present application are limited to that.

In this possible scenario, the given mapping relationship including a form of table is taken as an example, for example, in case of determining the channel SRS resources corresponding to the first transmission based on the number of codewords, the indication information, and the given codebook, the following Embodiment IV may be referred.

### Embodiment IV

Step 1: a scheduling message for PUSCH transmission transmitted from a network device is received, where the scheduling message includes the parameter information and the indication information for PUSCH transmission, the parameter information is used to determine the number of codewords, and the indication information is used to indicate the channel SRS resources.

Step 2: in case that it is determined that the number of codewords of PUSCH is 1, the channel SRS resources corresponding to the PUSCH transmission is determined based on the indication information and a fourth table; in case that it is determined that the number of codewords of PUSCH is 2, the channel SRS resources corresponding to the PUSCH transmission is determined based on the indication information and a fifth table.

For example, the number of SRS resources indicated by any entry in the fourth table is not greater than 4, and the number of SRS resources indicated by any entry in the fifth table is greater than 4.

In this possible scenario, the given mapping relationship including the coding scheme is taken as an example, for example, in case of determining the channel SRS resources corresponding to the first transmission based on the number of codewords, the indication information, and the given codebook, the following Embodiment V may be referred.

### Embodiment V

Step 1: a scheduling message for PUSCH transmission transmitted from a network device is received, where the scheduling message includes the parameter information and the indication information for the PUSCH transmission, the parameter information is used to determine the number of codewords, and the indication information is used to indicate the channel SRS resources.

Step 2: in case that it is determined that the number of codewords of PUSCH is 1, the channel SRS resources corresponding to the PUSCH transmission is determined based on the indication information and a fourth coding scheme; in case that it is determined that the number of codewords of PUSCH is 2, the channel SRS resources corresponding to the PUSCH transmission is determined based on the indication information and a fifth coding scheme.

For example, the number of SRS resources indicated by any piece of indication information in the fourth coding scheme is not greater than 4, and the number of SRS resources indicated by any piece of indication information in the fifth coding scheme is greater than 4.

Based on the above description, it may be seen that in case that the *maxMIMOLayers* is greater than 4 and the number of codewords of PUSCH is 2, the SRS resources corresponding to the PUSCH transmission are determined based on the fourth table, and/or, the SRS resources corresponding to the PUSCH transmission are determined based on the fourth coding scheme; in case that the number of codewords of PUSCH is 1, the SRS resources corresponding to the PUSCH transmission are determined based on the fifth table, and/or, the SRS resources corresponding to the PUSCH transmission are determined based on the fifth coding scheme;
and/or,
in case that the *maxMIMOLayers* is smaller than or equal to 4, the SRS resources corresponding to the PUSCH transmission are determined based on the sixth table, and/or the SRS resources corresponding to the PUSCH transmission are determined based on the sixth coding scheme.

The number of SRS resources indicated by any entry in the sixth table is one item from 1 to *maxMIMOLayers;* the number of SRS resources indicated by any piece of indication information in the third coding scheme is one item from 1 to *maxMIMOLayers.*

The *maxMIMOLayers* is one or more of the following: the maximum number of layers determined based on the restriction information for number of layers, or the maximum number of MIMO layers that PUSCH may be scheduled, that is, the number of layers configured by the network device; or, the maximum number of MIMO layers for PUSCH transmission supported by the UE, that is, the maximum number of layers supported by the UE.

For example, in any of the embodiments of the present application, the types of DCI format 0_1 and DCI format 0_2 used for scheduling PUSCH may correspond to the same *maxMIMOLayers* parameter or different *maxMIMOLayers* parameters. For example, one of them is indicated by *maxMIMOLayersDCI-0-1* and another is indicated by *maxMIMOLayersDCI-0-2.* The specific settings may be made according to actual needs, which is not limited in the embodiments of the present application.

In the above embodiments, the scheduling information for PUSCH may refer to DCI or the scheduling information configured by RRC signaling, that is, the method for determining information provided by the embodiments of the present application may be used for PUSCH transmission based on DCI scheduling or for PUSCH transmission based on configured grant.

It should be noted that in non-codebook-based PUSCH scenarios, SRS resources and the number of layers may be indicated separately, that is, each of the pre-coding matrix and the number of layers has its own indication information, and the number of SRS resources is equal to the number of layers. In case that the number of codewords of PUSCH is 1, the channel SRS resources indicated by the indication information are channel SRS resources with the number of SRS resources not greater than 4; in case that the number of codewords of PUSCH is 2, the channel SRS resources indicated by the indication information are channel SRS resources with the number of SRS resources greater than 4.

In case that the number of codewords of PUSCH is 1, the number of layers indicated by the indication information is not greater than 4; in case that the number of codewords of PUSCH is 2, the number of layers indicated by the indication information is greater than 4.

It should be noted that the above embodiments are only described by taking PUSCH transmission as an example. In future systems, it may be extended to more uplink transmissions, such as uplink control channel (physical uplink control channel, PUCCH) transmission, etc., and may be specifically set according to actual needs.

FIG. 2 is a second schematic flowchart of a method for determining information according to an embodiment of the present application, and the method for determining information may be performed by a network device, such as a base station, etc. Referring to FIG. 2, the method for determining information includes:
S201: the network device determines parameter information corresponding to a first transmission and indication information corresponding to target information corresponding to the first transmission, where the parameter information is used to determine a number of codewords, the target information includes one or more of a pre-coding matrix, a number of layers or a channel sounding reference signaling (SRS) resource, and the indication information is used to indicate the target information; and
S202: the network device transmits the parameter information and indication information to a user equipment (UE).

For example, the parameter information includes one or more of the following:
information of the number of codewords;
modulation and coding scheme (MCS) indication information of the first transmission; or
redundancy version (RV) indication information of the first transmission.

For example, determining the indication information includes:
determining the indication information based on the target information.

For example, determining the indication information based on the target information includes:
determining the indication information based on the target information and a given mapping relationship, where the given mapping relationship is used to represent a mapping relationship between the indication information and the target information.

For example, the given mapping relationship may be expressed in one or more of the following forms:
codebook;
table;
bitmap; or
function.

For example, in any of the embodiments of the present application, the number of codewords may be determined based on the target information, or the target information may be determined based on the number of codewords. The specific settings may be made according to actual needs, and the embodiments of the present application are not limited thereto.

For example, in case that the target information includes the pre-coding matrix, if the number of codewords is a first number, the pre-coding matrix indicated by the indication information is a pre-coding matrix corresponding to a number of layers within a first range of the number of layers; and
if the number of codewords is a second number, the pre-coding matrix indicated by the indication information is a pre-coding matrix corresponding to a number of layers within a second range of number of layers, where the first range of number of layers and the second range of number of layers are different.

For example, a maximum number of layers in the first range of number of layers and the second range of number of layers is determined based on one or more of the following:
a maximum number of layers determined based on restriction information for number of layers;
a number of layers configured by a network device; or
a maximum number of layers supported by the UE.

For example, the bit width of the indication information is determined based on the first range of number of layers and/or the second range of number of layers.

For example, in case that the target information includes the number of layers, if the number of codewords is a first number, the number of layers indicated by the indication information is a number of layers within the first range of number of layers; and
if the number of codewords is a second number, the number of layers indicated by the indication information is a number of layers within the second range of number of layers.

For example, the bit width of the indication information is determined based on the first range of number of layers and/or the second range of number of layers.

For example, the bit width of the indication information is determined based on a third number of layers within the first range of number of layers and/or a fourth number of layers within the second range of number of layers;
in case that the bit width of the indication information is determined based on the third number and the fourth number, the bit width of the indication information is the maximum number of the third number and the fourth number.

For example, in case that the target information includes channel SRS resources, if the number of codewords is the first number, the number of channel SRS resources indicated by the indication information is a value within a first range;
if the number of codewords is the second number, the number of channel SRS resources indicated by the indication information is a value within a second range, where the first range and the second range are different.

For example, the bit width of the indication information is determined based on the first range and/or the second range.

For example, the bit width of the indication information is determined based on a fifth number of values included in the first range and/or a sixth number of values included in the second range, where in case that the bit width of the indication information is determined based on the fifth number and the sixth number, the bit width of the indication information is the maximum number of the fifth number and the sixth number.

It should be noted that, in the embodiments of the present application, the specific implementation thereof may refer to the related description in the above embodiments, and the same details are not repeated in the embodiments of the present application.

For example, in any of the embodiments of the present application, in case that the network device transmits associated information to the UE, such as parameter information, indication information, etc., it may be indicated through one or more of the radio resource control (RRC) signaling, the media access control-control element (MAC-CE) signaling, or the DCI signaling, which may be specifically set according to actual needs.

It may be seen that in the embodiments of the present application, the network device determines the parameter information corresponding to the first transmission and the indication information corresponding to the target information corresponding to the first transmission, where the parameter information is used to determine the number of codewords, the target information includes one or more of the pre-coding matrix, the number of layers, or the channel SRS resource, and the indication information is used to indicate the target information; and the network device transmits the parameter information and the indication information to the UE. As such, the UE determines the target information corresponding to the first transmission based on the parameter information and the indication information. In this way, the target information corresponding to the first transmission is determined in combination with the parameter information for determining the number of codewords of the first transmission, which effectively reduces the overhead of the indication information, and solves the problem in large overhead of indication information for indicating the pre-coding matrix, the number of layers or the channel SRS resources induced by the increased number of antenna ports, and then the overhead of the indication information is reduced.

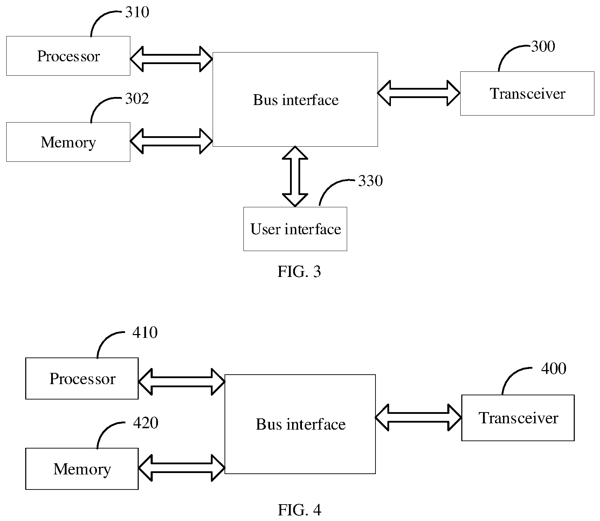

FIG. 3 is a schematic structural diagram of a user equipment (UE) according to an embodiment of the present application. As shown in FIG. 3, the UE includes a memory 320, a transceiver 300, and a processor 310,
where the memory 320 is used for storing a computer program, the transceiver 300 is used for receiving and transmitting data under control of the processor 310, and the processor 310 is used for reading the computer program in the memory 320 and performing following operations:
receiving indication information and parameter information corresponding to a first transmission transmitted from a network device, where the parameter information is used to determine a number of codewords, the indication information is used to indicate target information, and the target information includes one or more of a pre-coding matrix, a number of layers, or a channel sounding reference signaling (SRS) resource; and
determining the target information corresponding to the first transmission based on the parameter information and the indication information.

In an embodiment, the transceiver 300 is used for receiving and transmitting data under the control of the processor 310.

In FIG. 3, a bus architecture may include any number of interconnected buses and bridges, which are linked together through various circuits of one or more processors represented by the processor 310 and one or more memories represented by the memory 320. The bus architecture may also link together various other circuits, such as peripherals, voltage regulators, and power management circuits, etc., which are well known in the art, and therefore are not further described in the present application. The bus interface provides an interface. The transceiver 300 may include multiple elements, i.e., including a transmitter and a receiver, for providing units for communicating with various other devices over transmission media including wireless channels, wired channels, fiber optic cables, and the like. For different user equipments, a user interface 330 may be an interface with a capability of connecting external and internal devices, including but are not limited to keypads, displays, speakers, microphones, joysticks, etc.

The processor 310 is responsible for managing the bus architecture and general processing, and the memory 320 may store data used by the processor 310 when performing operations.

In an embodiment, the processor 310 may be a central processing unit (CPU), an application specific integrated circuit (ASIC), a field-programmable gate array (FPGA), or a complex programmable logic device (CPLD), the processor may also use a multi-core architecture.

The processor calls the computer program stored in the memory to perform any of the methods performed by the UE provided by the embodiments of the present application according to the obtained executable instructions. The processor and the memory may also be arranged to be physically separated.

For example, in any of the embodiments of the present application, the parameter information includes one or more of the following:
information of the number of codewords;
modulation and coding scheme (MCS) indication information of the first transmission; or
redundancy version (RV) indication information of the first transmission.

For example, in any of the embodiments of the present application, determining the target information corresponding to the first transmission based on the parameter information and the indication information includes:
determining the number of codewords based on the parameter information; and
determining the target information corresponding to the first transmission based on the number of codewords and the indication information.

For example, in any of the embodiments of the present application, determining the target information corresponding to the first transmission based on the number of codewords and the indication information includes:
determining the target information corresponding to the first transmission based on the number of codewords, the indication information, and a given mapping relationship;
where the given mapping relationship is used to represent a mapping relationship between the indication information and the target information.

For example, in any of the embodiments of the present application, the given mapping relationship is expressed in one or more of the following forms:
codebook;
table;
bitmap; or
function.

For example, in any of the embodiments of the present application, in case that the target information includes the pre-coding matrix,
if the number of codewords is a first number, the pre-coding matrix indicated by the indication information is a pre-coding matrix corresponding to a number of layers within a first range of number of layers; and
if the number of codewords is a second number, the pre-coding matrix indicated by the indication information is a pre-coding matrix corresponding to a number of layers within a second range of number of layers, where the first range of number of layers and the second range of number of layers are different.

For example, in any of the embodiments of the present application, a maximum number of layers in the first range of number of layers and the second range of number of layers is determined based on one or more of the following:
a maximum number of layers determined based on restriction information for number of layers;
a number of layers configured by the network device; or
a maximum number of layers supported by the UE.

For example, in any of the embodiments of the present application, a bit width of the indication information is determined based on the first range of number of layers and/or the second range of number of layers.

For example, in any of the embodiments of the present application, in case that the target information includes the number of layers,
if the number of codewords is a first number, the number of layers indicated by the indication information is a number of layers within a first range of number of layers; and
if the number of codewords is a second number, the number of layers indicated by the indication information is a number of layers within a second range of number of layers.

For example, in any of the embodiments of the present application, a bit width of the indication information is determined based on the first range of number of layers and/or the second range of number of layers.

For example, in any of the embodiments of the present application, the bit width of the indication information is determined based on a third number of layers within the first range of number of layers, and/or a fourth number of layers within the second range of number of layers;
where in case that the bit width of the indication information is determined based on the third number and the fourth number, the bit width of the indication information is a maximum number of the third number and the fourth number.

For example, in any of the embodiments of the present application, in case that the target information includes the channel SRS resource,
if the number of codewords is a first number, a number of channel SRS resources indicated by the indication information is a value within a first range; and
if the number of codewords is a second number, a number of channel SRS resources indicated by the indication information is a value within a second range, where the first range and the second range are different.

For example, in any of the embodiments of the present application, a bit width of the indication information is determined based on the first range and/or the second range.

For example, in any of the embodiments of the present application, the bit width of the indication information is determined based on a fifth number of values included in the first range and/or a sixth number of values included in the second range;
where in case that the bit width of the indication information is determined based on the fifth number and the sixth number, the bit width of the indication information is a maximum number of the fifth number and the sixth number.

For example, in any of the embodiments of the present application, determining the target information corresponding to the first transmission based on the parameter information and the indication information includes:
determining a number of antenna ports corresponding to the first transmission; and
determining the target information corresponding to the first transmission based on the parameter information and the indication information in case that the number of antenna ports is a given number.

It should be noted here that the above-mentioned UE provided in the embodiments of the present application may implement all the steps of methods implemented by the method embodiments in which the execution subject is the UE, and may achieve the same effects. The same parts and beneficial effects in the embodiments as those in the method embodiments are not described in detail.

FIG. 4 is a schematic structural diagram of a network device according to an embodiment of the present application. As shown in FIG. 4, the network device includes a memory 420, a transceiver 400, and a processor 410;
where the memory 420 is used for storing a computer program, the transceiver 400 is used for receiving and transmitting data under control of the processor 410, and the processor 410 is used for reading the computer program in the memory 420 and performing following operations:
determining parameter information corresponding to a first transmission and indication information corresponding to target information corresponding to the first transmission, where the parameter information is used to determine a number of codewords, the target information includes one or more of a pre-coding matrix, a number of layers, or a channel sounding reference signaling (SRS) resource, and the indication information is used to indicate the target information; and
transmitting the parameter information and the indication information to a user equipment (UE).

In an embodiment, the transceiver 400 is used for receiving and transmitting data under control of the processor 410.

In FIG. 4, a bus architecture may include any number of interconnected buses and bridges, which are linked together through various circuits of one or more processors represented by the processor 410 and one or more memories represented by the memory 420. The bus architecture may also link together various other circuits, such as peripherals, voltage regulators, and power management circuits, etc., which are well known in the art, and therefore are not further described in the present application. The bus interface provides an interface. The transceiver 400 may include multiple elements, i.e., including a transmitter and a receiver, for providing units for communicating with various other devices over transmission media including wireless channels, wired channels, fiber optic cables, and the like. The processor 410 is responsible for managing the bus architecture and general processing, and the memory 420 may store data used by the processor 410 when performing operations.

The processor 410 may be a central processing unit (CPU), an application specific integrated circuit (ASIC), a field-programmable gate array (FPGA), or a complex programmable logic device (CPLD), the processor may also use a multi-core architecture.

For example, in any of the embodiments of the present application, the parameter information includes one or more of the following:
information of the number of codewords;
modulation and coding scheme (MCS) indication information of the first transmission; or
redundancy version (RV) indication information of the first transmission.

For example, in any of the embodiments of the present application, determining the indication information includes:
determining the indication information based on the target information.

For example, in any of the embodiments of the present application, determining the indication information based on the target information includes:
determining the indication information based on the target information and a given mapping relationship;
where the given mapping relationship is used to represent a mapping relationship between the indication information and the target information.

For example, in any of the embodiments of the present application, the given mapping relationship is expressed in one or more of the following forms:
codebook;
table;
bitmap; or
function.

For example, in any of the embodiments of the present application, in case that the target information includes the pre-coding matrix,
if the number of codewords is a first number, the pre-coding matrix indicated by the indication information is a pre-coding matrix corresponding to a number of layers within a first range of number of layers; and
if the number of codewords is a second number, the pre-coding matrix indicated by the indication information is a pre-coding matrix corresponding to a number of layers within a second range of number of layers, where the first range of number of layers and the second range of number of layers are different.

For example, in any of the embodiments of the present application, a maximum number of layers in the first range of number of layers and the second range of number of layers is determined based on one or more of the following:
a maximum number of layers determined based on restriction information for number of layers;
a number of layers configured by the network device; or
a maximum number of layers supported by the UE.

For example, in any of the embodiments of the present application, a bit width of the indication information is determined based on the first range of number of layers and/or the second range of number of layers.

For example, in any of the embodiments of the present application, in case that the target information includes the number of layers,
if the number of codewords is a first number, the number of layers indicated by the indication information is a number of layers within a first range of number of layers; and
if the number of codewords is a second number, the number of layers indicated by the indication information is a number of layers within a second range of number of layers.

For example, in any of the embodiments of the present application, a bit width of the indication information is determined based on the first range of number of layers and/or the second range of number of layers.

For example, in any of the embodiments of the present application, the bit width of the indication information is determined based on a third number of layers within the first range of number of layers, and/or a fourth number of layers within the second range of number of layers;
where in case that the bit width of the indication information is determined based on the third number and the fourth number, the bit width of the indication information is a maximum number of the third number and the fourth number.

For example, in any of the embodiments of the present application, in case that the target information includes the channel SRS resource,
if the number of codewords is a first number, a number of channel SRS resources indicated by the indication information is a value within a first range; and
if the number of codewords is a second number, a number of channel SRS resources indicated by the indication information is a value within a second range, where the first range and the second range are different.

For example, in any of the embodiments of the present application, a bit width of the indication information is determined based on the first range and/or the second range.

For example, in any of the embodiments of the present application, the bit width of the indication information is determined based on a fifth number of values included in the first range and/or a sixth number of values included in the second range;
where in case that the bit width of the indication information is determined based on the fifth number and the sixth number, the bit width of the indication information is a maximum number of the fifth number and the sixth number.

It should be noted here that the above-mentioned network device provided in the embodiments of the present application may implement all the steps of methods implemented by the method embodiments in which the execution subject is the network device, and may achieve the same effects. The same parts and beneficial effects in the embodiments as those in the method embodiments are not described in detail.

An embodiment of the present application further provides an apparatus for determining information, to solve the problem in the related art that as the number of antenna ports increases, the overhead of indication information for indicating the pre-coding matrix, the number of layers or the channel SRS resources is large, to reduce the overhead of the indication information. The methods and the apparatuses for determining information are based on the same concept. Since the methods and apparatuses solve problems in similar principles, the implementation of the apparatuses and methods may be referred to each other, and the same details are not repeated.

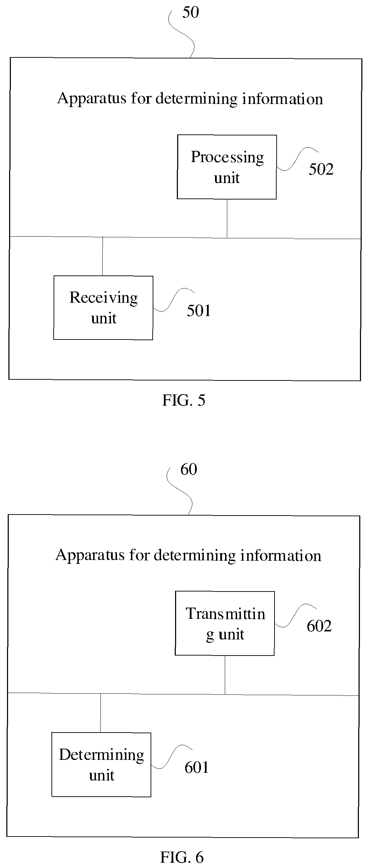

An embodiment of the present application provides an apparatus for determining information, which is used in a user equipment (UE). As shown in FIG. 5, FIG. 5 is a first schematic structural diagram of an apparatus for determining information according to an embodiment of the present application. The apparatus 50 for determining information includes:
a receiving unit 501, used for receiving indication information and parameter information corresponding to a first transmission transmitted from a network device, where the parameter information is used to determine a number of codewords, the indication information is used to indicate target information, and the target information includes one or more of a pre-coding matrix, a number of layers, or a channel sounding reference signaling (SRS) resource; and
a processing unit 502, used for determining the target information corresponding to the first transmission based on the parameter information and the indication information.

For example, in any of the embodiments of the present application, the parameter information includes one or more of the following:
information of the number of codewords;
modulation and coding scheme (MCS) indication information of the first transmission; or
redundancy version (RV) indication information of the first transmission.

For example, in any of the embodiments of the present application, the processing unit 502 is used for:
determining the number of codewords based on the parameter information; and determining the target information corresponding to the first transmission based on the number of codewords and the indication information.

For example, in any of the embodiments of the present application, the processing unit 502 is used for:
determining the target information corresponding to the first transmission based on the number of codewords, the indication information, and a given mapping relationship;
where the given mapping relationship is used to represent a mapping relationship between the indication information and the target information.

For example, in any of the embodiments of the present application, the given mapping relationship is expressed in one or more of the following forms:
codebook;
table;
bitmap; or
function.

For example, in any of the embodiments of the present application, in case that the target information includes the pre-coding matrix,
if the number of codewords is a first number, the pre-coding matrix indicated by the indication information is a pre-coding matrix corresponding to a number of layers within a first range of number of layers; and
if the number of codewords is a second number, the pre-coding matrix indicated by the indication information is a pre-coding matrix corresponding to a number of layers within a second range of number of layers, where the first range of number of layers and the second range of number of layers are different.

For example, in any of the embodiments of the present application, a maximum number of layers in the first range of number of layers and the second range of number of layers is determined based on one or more of the following:
a maximum number of layers determined based on restriction information for number of layers;
a number of layers configured by the network device; or
a maximum number of layers supported by the UE.

For example, in any of the embodiments of the present application, a bit width of the indication information is determined based on the first range of number of layers and/or the second range of number of layers.

For example, in any of the embodiments of the present application, in case that the target information includes the number of layers,
if the number of codewords is a first number, the number of layers indicated by the indication information is a number of layers within a first range of number of layers; and
if the number of codewords is a second number, the number of layers indicated by the indication information is a number of layers within a second range of number of layers.

For example, in any of the embodiments of the present application, a bit width of the indication information is determined based on the first range of number of layers and/or the second range of number of layers.

For example, in any of the embodiments of the present application, the bit width of the indication information is determined based on a third number of layers within the first range of number of layers, and/or a fourth number of layers within the second range of number of layers;
where in case that the bit width of the indication information is determined based on the third number and the fourth number, the bit width of the indication information is a maximum number of the third number and the fourth number.

For example, in any of the embodiments of the present application, in case that the target information includes the channel SRS resource,
if the number of codewords is a first number, a number of channel SRS resources indicated by the indication information is a value within a first range; and
if the number of codewords is a second number, a number of channel SRS resources indicated by the indication information is a value within a second range, where the first range and the second range are different.

For example, in any of the embodiments of the present application, a bit width of the indication information is determined based on the first range and/or the second range.

For example, in any of the embodiments of the present application, the bit width of the indication information is determined based on a fifth number of values included in the first range and/or a sixth number of values included in the second range;
where in case that the bit width of the indication information is determined based on the fifth number and the sixth number, the bit width of the indication information is a maximum number of the fifth number and the sixth number.

For example, in any of the embodiments of the present application, the processing unit 502 is used for:
determining a number of antenna ports corresponding to the first transmission; and
determining the target information corresponding to the first transmission based on the parameter information and the indication information in case that the number of antenna ports is a given number.

It should be noted here that the above-mentioned apparatus 50 for determining information provided by the embodiments of the present application may implement all the steps of methods implemented by the above-mentioned method embodiment with the UE as the execution subject, and may achieve the same technical effect. The same parts and beneficial effects in the embodiments as those in the method embodiments are not described in detail.

An embodiment of the present application provides an apparatus for determining information, which is used in a network device. As shown in FIG. 6, FIG. 6 is a second schematic structural diagram of an apparatus for determining information according to an embodiment of the present application. The apparatus 60 for determining information includes:
a determining unit 601, used for determining parameter information corresponding to a first transmission and indication information corresponding to target information corresponding to the first transmission, where the parameter information is used to determine a number of codewords, the target information includes one or more of a pre-coding matrix, a number of layers, or a channel sounding reference signaling (SRS) resource, and the indication information is used to indicate the target information; and
a transmitting unit 602, used for transmitting the parameter information and the indication information to a user equipment (UE).

For example, in any of the embodiments of the present application, the parameter information includes one or more of the following:
information of the number of codewords;
modulation and coding scheme (MCS) indication information of the first transmission; or
redundancy version (RV) indication information of the first transmission.

For example, in any of the embodiments of the present application, the determining unit 601 is used for determining the indication information based on the target information.

In an embodiment, the determining unit 601 is used for:
determining the indication information based on the target information and a given mapping relationship;
where the given mapping relationship is used to represent a mapping relationship between the indication information and the target information.

For example, in any of the embodiments of the present application, the given mapping relationship is expressed in one or more of the following forms:
codebook;
table;
bitmap; or
function.

For example, in any of the embodiments of the present application, in case that the target information includes the pre-coding matrix,
if the number of codewords is a first number, the pre-coding matrix indicated by the indication information is a pre-coding matrix corresponding to a number of layers within a first range of number of layers; and
if the number of codewords is a second number, the pre-coding matrix indicated by the indication information is a pre-coding matrix corresponding to a number of layers within a second range of number of layers, where the first range of number of layers and the second range of number of layers are different.

For example, in any of the embodiments of the present application, a maximum number of layers in the first range of number of layers and the second range of number of layers is determined based on one or more of the following:
a maximum number of layers determined based on restriction information for number of layers;
a number of layers configured by the network device; or
a maximum number of layers supported by the UE.

For example, in any of the embodiments of the present application, a bit width of the indication information is determined based on the first range of number of layers and/or the second range of number of layers.

For example, in any of the embodiments of the present application, in case that the target information includes the number of layers,
if the number of codewords is a first number, the number of layers indicated by the indication information is a number of layers within a first range of number of layers; and
if the number of codewords is a second number, the number of layers indicated by the indication information is a number of layers within a second range of number of layers.

For example, in any of the embodiments of the present application, a bit width of the indication information is determined based on the first range of number of layers and/or the second range of number of layers.

For example, in any of the embodiments of the present application, the bit width of the indication information is determined based on a third number of layers within the first range of number of layers, and/or a fourth number of layers within the second range of number of layers;
where in case that the bit width of the indication information is determined based on the third number and the fourth number, the bit width of the indication information is a maximum number of the third number and the fourth number.

For example, in any of the embodiments of the present application, in case that the target information includes the channel SRS resource,
if the number of codewords is a first number, a number of channel SRS resources indicated by the indication information is a value within a first range; and
if the number of codewords is a second number, a number of channel SRS resources indicated by the indication information is a value within a second range, where the first range and the second range are different.

For example, in any of the embodiments of the present application, a bit width of the indication information is determined based on the first range and/or the second range.

For example, in any of the embodiments of the present application, the bit width of the indication information is determined based on a fifth number of values included in the first range and/or a sixth number of values included in the second range;
where in case that the bit width of the indication information is determined based on the fifth number and the sixth number, the bit width of the indication information is a maximum number of the fifth number and the sixth number.

It should be noted here that the above-mentioned apparatus 60 for determining information provided by the embodiments of the present application may implement all the steps of methods implemented by the above-mentioned method embodiment with the network device as the execution subject, and may achieve the same technical effect. The same parts and beneficial effects in the embodiments as those in the method embodiments are not described in detail.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor readable storage medium. Based on such understanding, the solutions of the present application in essence or a part of the solutions that contributes to the related art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes, such as a U disk, a mobile hard disk, a read-only memory (ROM), a random access memory (RAM), a magnetic disk, or a compact disk.

An embodiment of the present application provides a processor-readable storage medium, which stores a computer program, and the computer program is used for causing a processor to perform any of the methods provided by the above embodiments, the method includes: receiving indication information and parameter information corresponding to a first transmission transmitted from a network device, where the parameter information is used to determine a number of codewords, the indication information is used to indicate target information, and the target information comprises one or more of a pre-coding matrix, a number of layers, or a channel sounding reference signaling (SRS) resource; and determining the target information corresponding to the first transmission based on the parameter information and the indication information.

The processor-readable storage medium may be any available medium or data storage device that may be accessed by the processor, including but not limited to magnetic storage (such as floppy disks, hard disks, magnetic tapes, magneto-optical disks (MO)), optical storage (such as CDs, DVDs, BDs, HVDs, etc.), and semiconductor storage (such as ROM, EPROM, EEPROM, non-volatile memory (NAND FLASH), solid-state drives (SSDs)), etc.

As will be appreciated by those skilled in the art, embodiments of the present application may be provided as methods, systems, or computer program products. Therefore, the present application may take the form of an entirely hardware embodiment, an entirely software embodiment, or an embodiment combining software with hardware. Moreover, the present application may take the form of a computer program product implemented on one or more computer-usable storage media having computer-usable program code, including but not limited to disk storage and optical storage, etc.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor readable memory capable of directing a computer or other programmable data processing apparatus to operate in a particular manner, and the instructions stored in the processor readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process, and instructions performed on the computer or other programmable devices provide steps for performing the functions specified in one or more flows of the flowchart and/or one or more blocks of the block diagram.

It will be apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

## Claims

1. A method for determining information, performed by a user equipment, UE, comprising:
receiving indication information and parameter information corresponding to a first transmission transmitted from a network device, wherein the parameter information is used to determine a number of codewords, the indication information is used to indicate target information, and the target information comprises one or more of a pre-coding matrix, a number of layers, or a channel sounding reference signaling, SRS, resource; and
determining the target information corresponding to the first transmission based on the parameter information and the indication information.

2. The method of claim 1, wherein the parameter information comprises one or more of the following:
information of the number of codewords;
modulation and coding scheme, MCS, indication information of the first transmission; or
redundancy version, RV, indication information of the first transmission.

3. The method of claim 2, wherein determining the target information corresponding to the first transmission based on the parameter information and the indication information comprises:
determining the number of codewords based on the parameter information; and
determining the target information corresponding to the first transmission based on the number of codewords and the indication information.

4. The method of claim 3, wherein determining the target information corresponding to the first transmission based on the number of codewords and the indication information comprises:
determining the target information corresponding to the first transmission based on the number of codewords, the indication information, and a given mapping relationship;
wherein the given mapping relationship is used to represent a mapping relationship between the indication information and the target information.

5. The method of claim 4, wherein the given mapping relationship is expressed in one or more of the following forms:
codebook;
table;
bitmap; or
function.

6. The method of any of claims 1 to 5, wherein in case that the target information comprises the pre-coding matrix,
if the number of codewords is a first number, the pre-coding matrix indicated by the indication information is a pre-coding matrix corresponding to a number of layers within a first range of number of layers; and
if the number of codewords is a second number, the pre-coding matrix indicated by the indication information is a pre-coding matrix corresponding to a number of layers within a second range of number of layers, wherein the first range of number of layers and the second range of number of layers are different.

7. The method of claim 6, wherein a maximum number of layers in the first range of number of layers and the second range of number of layers is determined based on one or more of the following:
a maximum number of layers determined based on restriction information for number of layers;
a number of layers configured by the network device; or
a maximum number of layers supported by the UE.

8. The method of claim 6, wherein a bit width of the indication information is determined based on the first range of number of layers and/or the second range of number of layers.

9. The method of any of claims 1 to 5, wherein in case that the target information comprises the number of layers,
if the number of codewords is a first number, the number of layers indicated by the indication information is a number of layers within a first range of number of layers; and
if the number of codewords is a second number, the number of layers indicated by the indication information is a number of layers within a second range of number of layers.

10. The method of claim 9, wherein a bit width of the indication information is determined based on the first range of number of layers and/or the second range of number of layers.

11. The method of claim 10, wherein the bit width of the indication information is determined based on a third number of layers within the first range of number of layers, and/or a fourth number of layers within the second range of number of layers;
wherein in case that the bit width of the indication information is determined based on the third number and the fourth number, the bit width of the indication information is a maximum number of the third number and the fourth number.

12. The method of any of claims 1 to 5, wherein in case that the target information comprises the channel SRS resource,
if the number of codewords is a first number, a number of channel SRS resources indicated by the indication information is a value within a first range; and
if the number of codewords is a second number, a number of channel SRS resources indicated by the indication information is a value within a second range, wherein the first range and the second range are different.

13. The method of claim 12, wherein a bit width of the indication information is determined based on the first range and/or the second range.

14. The method of claim 13, wherein the bit width of the indication information is determined based on a fifth number of values comprised in the first range and/or a sixth number of values comprised in the second range;
wherein in case that the bit width of the indication information is determined based on the fifth number and the sixth number, the bit width of the indication information is a maximum number of the fifth number and the sixth number.

15. The method of any of claims 1 to 14, wherein determining the target information corresponding to the first transmission based on the parameter information and the indication information comprises:
determining a number of antenna ports corresponding to the first transmission; and
determining the target information corresponding to the first transmission based on the parameter information and the indication information in case that the number of antenna ports is a given number.

16. A method for determining information, performed by a network device, comprising:
determining parameter information corresponding to a first transmission, and indication information corresponding to target information corresponding to the first transmission, wherein the parameter information is used to determine a number of codewords, the target information comprises one or more of a pre-coding matrix, a number of layers, or a channel sounding reference signaling, SRS, resource, and the indication information is used to indicate the target information; and
transmitting the parameter information and the indication information to a user equipment, UE.

17. The method of claim 16, wherein the parameter information comprises one or more of the following:
information of the number of codewords;
modulation and coding scheme, MCS, indication information of the first transmission; or
redundancy version, RV, indication information of the first transmission.

18. The method of claim 17, wherein determining the indication information comprises:
determining the indication information based on the target information.

19. The method of claim 18, wherein determining the indication information based on the target information comprises:
determining the indication information based on the target information and a given mapping relationship;
wherein the given mapping relationship is used to represent a mapping relationship between the indication information and the target information.

20. The method of claim 19, wherein the given mapping relationship is expressed in one or more of the following forms:
codebook;
table;
bitmap; or
function.

21. The method of any of claims 16 to 20, wherein in case that the target information comprises the pre-coding matrix,
if the number of codewords is a first number, the pre-coding matrix indicated by the indication information is a pre-coding matrix corresponding to a number of layers within a first range of number of layers; and
if the number of codewords is a second number, the pre-coding matrix indicated by the indication information is a pre-coding matrix corresponding to a number of layers within a second range of number of layers, wherein the first range of number of layers and the second range of number of layers are different.

22. The method of claim 21, wherein a maximum number of layers in the first range of number of layers and the second range of number of layers is determined based on one or more of the following:
a maximum number of layers determined based on restriction information for number of layers;
a number of layers configured by the network device; or
a maximum number of layers supported by the UE.

23. The method of claim 21, wherein a bit width of the indication information is determined based on the first range of number of layers and/or the second range of number of layers.

24. The method of any of claims 16 to 20, wherein in case that the target information comprises the number of layers,
if the number of codewords is a first number, the number of layers indicated by the indication information is a number of layers within a first range of number of layers; and
if the number of codewords is a second number, the number of layers indicated by the indication information is a number of layers within a second range of number of layers.

25. The method of claim 24, wherein a bit width of the indication information is determined based on the first range of number of layers and/or the second range of number of layers.

26. The method of claim 25, wherein the bit width of the indication information is determined based on a third number of layers within the first range of number of layers, and/or a fourth number of layers within the second range of number of layers;
wherein in case that the bit width of the indication information is determined based on the third number and the fourth number, the bit width of the indication information is a maximum number of the third number and the fourth number.

27. The method of any of claims 16 to 20, wherein in case that the target information comprises the channel SRS resource,
if the number of codewords is a first number, a number of channel SRS resources indicated by the indication information is a value within a first range; and
if the number of codewords is a second number, a number of channel SRS resources indicated by the indication information is a value within a second range, wherein the first range and the second range are different.

28. The method of claim 27, wherein a bit width of the indication information is determined based on the first range and/or the second range.

29. The method of claim 28, wherein the bit width of the indication information is determined based on a fifth number of values comprised in the first range and/or a sixth number of values comprised in the second range;
wherein in case that the bit width of the indication information is determined based on the fifth number and the sixth number, the bit width of the indication information is a maximum number of the fifth number and the sixth number.

30. A user equipment, UE, comprising a memory, a transceiver, and a processor;
wherein the memory is used for storing a computer program, the transceiver is used for receiving and transmitting data under control of the processor, and the processor is used for reading the computer program in the memory and performing following operations:
receiving indication information and parameter information corresponding to a first transmission transmitted from a network device, wherein the parameter information is used to determine a number of codewords, the indication information is used to indicate target information, and the target information comprises one or more of a pre-coding matrix, a number of layers, or a channel sounding reference signaling, SRS, resource; and
determining the target information corresponding to the first transmission based on the parameter information and the indication information.

31. The UE of claim 30, wherein the parameter information comprises one or more of the following:
information of the number of codewords;
modulation and coding scheme, MCS, indication information of the first transmission; or
redundancy version, RV, indication information of the first transmission.

32. The UE of claim 31, wherein determining the target information corresponding to the first transmission based on the parameter information and the indication information comprises:
determining the number of codewords based on the parameter information; and
determining the target information corresponding to the first transmission based on the number of codewords and the indication information.

33. The UE of claim 32, wherein determining the target information corresponding to the first transmission based on the number of codewords and the indication information comprises:
determining the target information corresponding to the first transmission based on the number of codewords, the indication information, and a given mapping relationship;
wherein the given mapping relationship is used to represent a mapping relationship between the indication information and the target information.

34. The UE of claim 33, wherein the given mapping relationship is expressed in one or more of the following forms:
codebook;
table;
bitmap; or
function.

35. The UE of any of claims 30 to 34, wherein in case that the target information comprises the pre-coding matrix,
if the number of codewords is a first number, the pre-coding matrix indicated by the indication information is a pre-coding matrix corresponding to a number of layers within a first range of number of layers; and
if the number of codewords is a second number, the pre-coding matrix indicated by the indication information is a pre-coding matrix corresponding to a number of layers within a second range of number of layers, wherein the first range of number of layers and the second range of number of layers are different.

36. The UE of claim 35, wherein a maximum number of layers in the first range of number of layers and the second range of number of layers is determined based on one or more of the following:
a maximum number of layers determined based on restriction information for number of layers;
a number of layers configured by the network device; or
a maximum number of layers supported by the UE.

37. The UE of claim 36, wherein a bit width of the indication information is determined based on the first range of number of layers and/or the second range of number of layers.

38. The UE of any of claims 30 to 34, wherein in case that the target information comprises the number of layers,
if the number of codewords is a first number, the number of layers indicated by the indication information is a number of layers within a first range of number of layers; and
if the number of codewords is a second number, the number of layers indicated by the indication information is a number of layers within a second range of number of layers.

39. The UE of claim 38, wherein a bit width of the indication information is determined based on the first range of number of layers and/or the second range of number of layers.

40. The UE of claim 39, wherein the bit width of the indication information is determined based on a third number of layers within the first range of number of layers, and/or a fourth number of layers within the second range of number of layers;
wherein in case that the bit width of the indication information is determined based on the third number and the fourth number, the bit width of the indication information is a maximum number of the third number and the fourth number.

41. The UE of any of claims 30 to 34, wherein in case that the target information comprises the channel SRS resource,
if the number of codewords is a first number, a number of channel SRS resources indicated by the indication information is a value within a first range; and
if the number of codewords is a second number, a number of channel SRS resources indicated by the indication information is a value within a second range, wherein the first range and the second range are different.

42. The UE of claim 41, wherein a bit width of the indication information is determined based on the first range and/or the second range.

43. The UE of claim 42, wherein the bit width of the indication information is determined based on a fifth number of values comprised in the first range and/or a sixth number of values comprised in the second range;
wherein in case that the bit width of the indication information is determined based on the fifth number and the sixth number, the bit width of the indication information is a maximum number of the fifth number and the sixth number.

44. The UE of any of claims 30 to 43, wherein determining the target information corresponding to the first transmission based on the parameter information and the indication information comprises:
determining a number of antenna ports corresponding to the first transmission; and
determining the target information corresponding to the first transmission based on the parameter information and the indication information in case that the number of antenna ports is a given number.

45. A network device, comprising a memory, a transceiver, and a processor;
wherein the memory is used for storing a computer program, the transceiver is used for receiving and transmitting data under control of the processor, and the processor is used for reading the computer program in the memory and performing following operations:
determining parameter information corresponding to a first transmission, and indication information corresponding to target information corresponding to the first transmission, wherein the parameter information is used to determine a number of codewords, the target information comprises one or more of a pre-coding matrix, a number of layers, or a channel sounding reference signaling, SRS, resource, and the indication information is used to indicate the target information; and
transmitting the parameter information and the indication information to a user equipment, UE.

46. The network device of claim 45, wherein the parameter information comprises one or more of the following:
information of the number of codewords;
modulation and coding scheme, MCS, indication information of the first transmission; or
redundancy version, RV, indication information of the first transmission.

47. The network device of claim 46, wherein determining the indication information comprises:
determining the indication information based on the target information.

48. The network device of claim 47, wherein determining the indication information based on the target information comprises:
determining the indication information based on the target information and a given mapping relationship;
wherein the given mapping relationship is used to represent a mapping relationship between the indication information and the target information.

49. The network device of claim 48, wherein the given mapping relationship is expressed in one or more of the following forms:
codebook;
table;
bitmap; or
function.

50. The network device of any of claims 45 to 49, wherein in case that the target information comprises the pre-coding matrix,
if the number of codewords is a first number, the pre-coding matrix indicated by the indication information is a pre-coding matrix corresponding to a number of layers within a first range of number of layers; and
if the number of codewords is a second number, the pre-coding matrix indicated by the indication information is a pre-coding matrix corresponding to a number of layers within a second range of number of layers, wherein the first range of number of layers and the second range of number of layers are different.

51. The network device of claim 50, wherein a maximum number of layers in the first range of number of layers and the second range of number of layers is determined based on one or more of the following:
a maximum number of layers determined based on restriction information for number of layers;
a number of layers configured by the network device; or
a maximum number of layers supported by the UE.

52. The network device of claim 50, wherein a bit width of the indication information is determined based on the first range of number of layers and/or the second range of number of layers.

53. The network device of any of claims 45 to 49, wherein in case that the target information comprises the number of layers,
if the number of codewords is a first number, the number of layers indicated by the indication information is a number of layers within a first range of number of layers; and
if the number of codewords is a second number, the number of layers indicated by the indication information is a number of layers within a second range of number of layers.

54. The network device of claim 53, wherein a bit width of the indication information is determined based on the first range of number of layers and/or the second range of number of layers.

55. The network device of claim 54, wherein the bit width of the indication information is determined based on a third number of layers within the first range of number of layers, and/or a fourth number of layers within the second range of number of layers;
wherein in case that the bit width of the indication information is determined based on the third number and the fourth number, the bit width of the indication information is a maximum number of the third number and the fourth number.

56. The network device of any of claims 45-49, wherein in case that the target information comprises the channel SRS resource,
if the number of codewords is a first number, a number of channel SRS resources indicated by the indication information is a value within a first range; and
if the number of codewords is a second number, a number of channel SRS resources indicated by the indication information is a value within a second range, wherein the first range and the second range are different.

57. The network device of claim 56, wherein a bit width of the indication information is determined based on the first range and/or the second range.

58. The network device of claim 57, wherein the bit width of the indication information is determined based on a fifth number of values comprised in the first range and/or a sixth number of values comprised in the second range;
wherein in case that the bit width of the indication information is determined based on the fifth number and the sixth number, the bit width of the indication information is a maximum number of the fifth number and the sixth number.

59. An apparatus for determining information, used in a user equipment, UE, comprising:
a receiving unit, used for receiving indication information and parameter information corresponding to a first transmission transmitted from a network device, wherein the parameter information is used to determine a number of codewords, the indication information is used to indicate target information, and the target information comprises one or more of a pre-coding matrix, a number of layers, or a channel sounding reference signaling, SRS, resource; and
a processing unit, used for determining the target information corresponding to the first transmission based on the parameter information and the indication information.

60. The apparatus of claim 59, wherein the parameter information comprises one or more of the following:
information of the number of codewords;
modulation and coding scheme, MCS, indication information of the first transmission; or
redundancy version, RV, indication information of the first transmission.

61. The apparatus of claim 59, wherein the processing unit is used for:
determining the number of codewords based on the parameter information; and determining the target information corresponding to the first transmission based on the number of codewords and the indication information.

62. The apparatus of claim 61, wherein the processing unit is used for:
determining the target information corresponding to the first transmission based on the number of codewords, the indication information, and a given mapping relationship;
wherein the given mapping relationship is used to represent a mapping relationship between the indication information and the target information.

63. The apparatus of claim 62, wherein the given mapping relationship is expressed in one or more of the following forms:
codebook;
table;
bitmap; or
function.

64. The apparatus of any of claims 59 to 63, wherein in case that the target information comprises the pre-coding matrix,
if the number of codewords is a first number, the pre-coding matrix indicated by the indication information is a pre-coding matrix corresponding to a number of layers within a first range of number of layers; and
if the number of codewords is a second number, the pre-coding matrix indicated by the indication information is a pre-coding matrix corresponding to a number of layers within a second range of number of layers, wherein the first range of number of layers and the second range of number of layers are different.

65. The apparatus of claim 64, wherein a maximum number of layers in the first range of number of layers and the second range of number of layers is determined based on one or more of the following:
a maximum number of layers determined based on restriction information for number of layers;
a number of layers configured by the network device; or
a maximum number of layers supported by the UE.

66. The apparatus of claim 64, wherein a bit width of the indication information is determined based on the first range of number of layers and/or the second range of number of layers.

67. The apparatus of any of claims 59 to 63, wherein in case that the target information comprises the number of layers,
if the number of codewords is a first number, the number of layers indicated by the indication information is a number of layers within a first range of number of layers; and
if the number of codewords is a second number, the number of layers indicated by the indication information is a number of layers within a second range of number of layers.

68. The apparatus of claim 67, wherein a bit width of the indication information is determined based on the first range of number of layers and/or the second range of number of layers.

69. The apparatus of claim 68, wherein the bit width of the indication information is determined based on a third number of layers within the first range of number of layers, and/or a fourth number of layers within the second range of number of layers;
wherein in case that the bit width of the indication information is determined based on the third number and the fourth number, the bit width of the indication information is a maximum number of the third number and the fourth number.

70. The apparatus of any of claims 59 to 63, wherein in case that the target information comprises the channel SRS resource,
if the number of codewords is a first number, a number of channel SRS resources indicated by the indication information is a value within a first range; and
if the number of codewords is a second number, a number of channel SRS resources indicated by the indication information is a value within a second range, wherein the first range and the second range are different.

71. The apparatus of claim 70, wherein a bit width of the indication information is determined based on the first range and/or the second range.

72. The apparatus of claim 71, wherein the bit width of the indication information is determined based on a fifth number of values comprised in the first range and/or a sixth number of values comprised in the second range;
wherein in case that the bit width of the indication information is determined based on the fifth number and the sixth number, the bit width of the indication information is a maximum number of the fifth number and the sixth number.

73. The apparatus of any of claims 59 to 72, wherein the processing unit is used for:
determining a number of antenna ports corresponding to the first transmission; and
determining the target information corresponding to the first transmission based on the parameter information and the indication information in case that the number of antenna ports is a given number.

74. An apparatus for determining information, used in a network device, comprising:
a determining unit, used for determining parameter information corresponding to a first transmission, and indication information corresponding to target information corresponding to the first transmission, wherein the parameter information is used to determine a number of codewords, the target information comprises one or more of a pre-coding matrix, a number of layers, or a channel sounding reference signaling, SRS, resource, and the indication information is used to indicate the target information; and
a transmitting unit, used for transmitting the parameter information and the indication information to a user equipment, UE.

75. The apparatus of claim 74, wherein the parameter information comprises one or more of the following:
information of the number of codewords;
modulation and coding scheme, MCS, indication information of the first transmission; or
redundancy version, RV, indication information of the first transmission.

76. The apparatus of claim 75, wherein the determining unit is used for determining the indication information based on the target information.

77. The apparatus of claim 76, wherein the determining unit is used for:
determining the indication information based on the target information and a given mapping relationship;
wherein the given mapping relationship is used to represent a mapping relationship between the indication information and the target information.

78. The apparatus of claim 77, wherein the given mapping relationship is expressed in one or more of the following forms:
codebook;
table;
bitmap; or
function.

79. The apparatus of any of claims 74 to 78, wherein in case that the target information comprises the pre-coding matrix,
if the number of codewords is a first number, the pre-coding matrix indicated by the indication information is a pre-coding matrix corresponding to a number of layers within a first range of number of layers; and
if the number of codewords is a second number, the pre-coding matrix indicated by the indication information is a pre-coding matrix corresponding to a number of layers within a second range of number of layers, wherein the first range of number of layers and the second range of number of layers are different.

80. The apparatus of claim 79, wherein a maximum number of layers in the first range of number of layers and the second range of number of layers is determined based on one or more of the following:
a maximum number of layers determined based on restriction information for number of layers;
a number of layers configured by the network device; or
a maximum number of layers supported by the UE.

81. The apparatus of claim 80, wherein a bit width of the indication information is determined based on the first range of number of layers and/or the second range of number of layers.

82. The apparatus of any of claims 74 to 78, wherein in case that the target information comprises the number of layers,
if the number of codewords is a first number, the number of layers indicated by the indication information is a number of layers within a first range of number of layers; and
if the number of codewords is a second number, the number of layers indicated by the indication information is a number of layers within a second range of number of layers.

83. The apparatus of claim 82, wherein a bit width of the indication information is determined based on the first range of number of layers and/or the second range of number of layers.

84. The apparatus of claim 83, wherein the bit width of the indication information is determined based on a third number of layers within the first range of number of layers, and/or a fourth number of layers within the second range of number of layers;
wherein in case that the bit width of the indication information is determined based on the third number and the fourth number, the bit width of the indication information is a maximum number of the third number and the fourth number.

85. The apparatus of any of claims 74 to 78, wherein in case that the target information comprises the channel SRS resource,
if the number of codewords is a first number, a number of channel SRS resources indicated by the indication information is a value within a first range; and
if the number of codewords is a second number, a number of channel SRS resources indicated by the indication information is a value within a second range, wherein the first range and the second range are different.

86. The apparatus of claim 85, wherein a bit width of the indication information is determined based on the first range and/or the second range.

87. The apparatus of claim 86, wherein the bit width of the indication information is determined based on a fifth number of values comprised in the first range and/or a sixth number of values comprised in the second range;
wherein in case that the bit width of the indication information is determined based on the fifth number and the sixth number, the bit width of the indication information is a maximum number of the fifth number and the sixth number.

88. A processor-readable storage medium, storing a computer program, wherein the computer program is used for causing a processor to perform the method of any of claims 1 to 15, or the method of any of claims 16 to 29.
